# EUROPEAN PATENT APPLICATION

(11) **EP 4 819 561 A1**
(43) Date of publication of application: **07.10.2026**
(21) Application number: 24915149.9
(22) Date of filing: 24.12.2024
(51) Int. Cl.: H04L 41/08

(54) **METHOD AND APPARATUS FOR AUTOMATIC PARAMETER CONFIGURATION, AND CHIP AND COMMUNICATION SYSTEM**

(30) Priority: 04.01.2024 CN 202410029117
(71) Applicant: Huawei Technologies Co., Ltd., Shenzhen, Guangdong 518129 (CN)
(72) Inventor: TANG, Xiaoyan, Shenzhen, Guangdong 518129 (CN); HU, Jun, Shenzhen, Guangdong 518129 (CN); LI, Zan, Shenzhen, Guangdong 518129 (CN); MI, Guangcan, Shenzhen, Guangdong 518129 (CN)
(74) Representative: Huawei European IPR
(86) International application number: PCT/CN2024/141992
(87) International publication number: WO 2025/145934

(57) **Abstract**

This application discloses a parameter auto-configuration method, an apparatus, a chip, and a communication system, and belongs to the field of communication technologies. In the parameter auto-configuration process, a first device in a communication system receives a control frame sent by a second device, where the control frame includes first LT information and first extended information; and the first device executes functions of both the first LT information and the first extended information. The first LT information is used to implement a first function of link training, the first extended information includes at least one of AN information, second LT information, or LT control information, the AN information includes a parameter used for auto-negotiation between the first device and the second device, the second LT information is used to implement a second function of the link training, and the LT control information is used to control the link training. This method provides high scalability for the parameter auto-configuration process, thereby helping improve the accuracy of auto-configured parameters and the efficiency of the auto-configuration process.

## Description

This application claims priority to Chinese Patent Application No. 202410029117.6, filed with the China National Intellectual Property Administration on January 4, 2024 and entitled "PARAMETER AUTO-CONFIGURATION METHOD, APPARATUS, CHIP, AND COMMUNICATION SYSTEM", which is incorporated herein by reference in its entirety.

### TECHNICAL FIELD

This application relates to the field of communication technologies, and in particular, to a parameter auto-configuration method, an apparatus, a chip, and a communication system.

### BACKGROUND

In the field of communication technologies, different devices within a communication system are connected through at least one of an optical channel or an electrical channel. Parameters between these devices need to be automatically configured to enable the establishment of a communication link based on the auto-configured parameters.

In related technologies, a link training (link training, LT) frame is exchanged between different devices through a channel. The LT frame carries LT information to implement basic link training functions. Link training refers to the process of training control parameters between different devices, thereby enabling basic control parameters to be automatically configured between them.

However, in the related technologies, only basic control parameters can be automatically configured, and scalability of the parameter auto-configuration process is poor.

### SUMMARY

This application provides a parameter auto-configuration method, an apparatus, a chip, and a communication system, to address the problem of poor scalability of the parameter auto-configuration process. The technical solutions provided in this application include the following aspects.

According to a first aspect, a parameter auto-configuration method is provided. The method is applied to a first device included in a communication system, and the communication system further includes a second device. In the method, the first device receives a control frame sent by the second device, where the control frame includes first LT information and first extended information; and the first device executes functions of both the first LT information and the first extended information. The first LT information is used to implement a first function of link training, the link training refers to training of a control parameter for a link between the first device and the second device, the first extended information includes at least one of auto-negotiation (auto-negotiation, AN) information, second LT information, or LT control information, the AN information includes a parameter used for auto-negotiation between the first device and the second device, the second LT information is used to implement a second function of the link training, and the LT control information is used to control the link training.

This application provides a control frame. The control frame may not only carry the first LT information, but also carry the first extended information. The control frame has high scalability. Based on the control frame, the first device can execute the function of the first LT information, to obtain a control parameter for the link by training the first function of the link training, and can also execute the function of the first extended information, so that function extension is implemented based on the function of the first LT information, and the function extension can make auto-configured parameters richer and more accurate. The function extension is relatively flexible and comprehensive, and is applicable to complex scenarios with high requirements on parameter accuracy and auto-configuration efficiency, for example, complex scenarios in which there are a large quantity of devices and device types in a communication system.

When the first extended information includes the AN information, in this application, an LT procedure can be completed at least based on the first LT information in the control frame, to obtain a control parameter through training, and an AN procedure can be also completed based on the AN information in the control frame, to obtain a parameter through auto-negotiation (also referred to as self-negotiation). In this way, the LT procedure and the AN procedure are integrated. In addition, a sequence of the LT procedure and the AN procedure does not need to be limited, and flexible and elastic combination and nesting of the LT procedure and the AN procedure are supported. For example, an LT procedure and an AN procedure are performed alternately, one or more AN procedures are inserted into two LT procedures, or one or more LT procedures are inserted into two AN procedures. If the LT procedure is performed before the AN procedure, a control parameter obtained through training in the LT procedure may be referred to during auto-negotiation in the AN procedure. If the AN procedure is performed before the LT procedure, a parameter obtained through auto-negotiation in the AN procedure may be referred to during training in the LT procedure. Therefore, not only the efficiency of the AN procedure and the LT procedure is improved, but also the accuracy of the parameters configured via the AN procedure and the LT procedure is ensured, so that validity and compatibility of the auto-configured parameters can be improved, and the auto-configured parameters have high applicability.

When the first extended information does not include the AN information, in this application, an LT procedure can be completed at least based on the first LT information in the control frame, to obtain a control parameter through training. In addition, if the first extended information includes the second LT information, more control parameters can be obtained through training based on the second LT information. If the first extended information includes the LT control information, the link training can be controlled based on the LT control information, to obtain a more accurate control parameter through training.

In a possible implementation, the control frame is an improved LT frame, the first LT information is located in a control and status field of the improved LT frame, and the first extended information is in a pseudo random binary sequence (pseudo random binary sequence, PRBS) field of the improved LT frame. In this application, a standard LT frame is improved, and a PRBS field of the standard LT frame is fully used. In this way, the PRBS field can carry the first extended information, so that an improved LT frame is obtained. In addition, the improved LT frame can reuse an LT state machine defined in a related protocol. This has a wide application scope and low implementation costs.

In a possible implementation, the control frame is a combination of an improved LT frame and a next frame of the improved LT frame, the first LT information is in a control and status field of the improved LT frame, and the first extended information is in the next frame of the improved LT frame. In this application, another improvement is made to the standard LT frame, so that adjacent LT frames can be combined to separately carry the first LT information and the first extended information. This has high scalability. In this implementation, both the improved LT frame and the next frame of the improved LT frame can reuse an LT state machine defined in a related protocol. This has a wide application scope and low implementation costs.

In a possible implementation, the improved LT frame includes a first identifier, and the first identifier indicates that the next frame of the improved LT frame includes the first extended information. In this implementation, it may be determined, based on the first identifier in the improved LT frame, that the first extended information is carried in the next frame of the improved LT frame. This helps quickly locate the first extended information, and can accurately distinguish between the improved LT frame that carries the first LT information and the next frame that carries the first extended information.

In a possible implementation, the control frame is an improved AN frame, the first extended information includes the AN information, the AN information is on a base page of the improved AN frame, and information in the control frame other than the AN information is on a next page of the improved AN frame.

In this application, a standard AN frame is improved, and a next page of the standard AN frame is fully used. In this way, the next page can carry the first extended information, so that the improved AN frame is obtained. The next page has high scalability, and supports a flexible encoding manner. This helps carry appropriate first extended information based on actual requirements. In addition, the improved AN frame can reuse an AN state machine defined in a related protocol. This has a wide application scope and low implementation costs.

In a possible implementation, the base page of the improved AN frame includes a second identifier, and the second identifier indicates presence of the next page of the improved AN frame. The presence of the next page may be determined based on the second identifier in the base page of the improved AN frame, so that the first extended information carried in the next page can be obtained, thereby helping quickly locate the first extended information.

In a possible implementation, the control frame further includes second extended information, and the second extended information is different from the first extended information. For example, the second extended information and the first extended information are in a same field of the control frame, and the second extended information is before or after the first extended information. Alternatively, the second extended information and the first extended information are in different fields of the control frame. The second extended information supports customization, and the second extended information can be set based on actual requirements, to facilitate auto-configuration of a parameter based on the second extended information. Therefore, scalability of the control frame and scalability of a parameter auto-configuration process are further improved. This is more flexible and has a wide application scope.

In a possible implementation, after the first device receives the control frame sent by the second device, the method further includes: The first device fills the control frame with reference information of the first device, to obtain an updated control frame. The first device sends the updated control frame to a third device that is in the communication system, where the updated control frame is used by the third device to execute a function of information included in the updated control frame. Therefore, after receiving the updated control frame, the third device can obtain both the information about the second device (for example, the first LT information and the first extended information that are included in the control frame) and the reference information of the first device. The third device obtains rich information. This helps improve the efficiency of parameter auto-configuration on the third device and the accuracy of a configured parameter. Certainly, the first device may alternatively not perform filling, but send the control frame to the third device after parsing the control frame, obtaining the information about the second device, and performing parameter auto-configuration. This manner has a low requirement on a capability of the first device, because the first device is allowed to have no filling capability or have but not use the filling capability. Therefore, parsing and filling of the control frame by different devices in the communication system are independent and hierarchical. This has universality and ease of use. Even if devices with different capabilities exist in the communication system, the parameter auto-configuration method provided in this application can be implemented.

In a possible implementation, the reference information, the first LT information, and the first extended information are in different fields of the updated control frame. In another possible implementation, the reference information, the first LT information, and the first extended information are in a same field of the updated control frame, and the reference information is after or before the first LT information and the first extended information. In this application, the reference information can be carried in a plurality of locations in the control frame. This is relatively flexible.

In a possible implementation, the reference information of the first device includes information about a transmission channel of the first device. The transmission channel is a lane, and one first device may correspond to one or more lanes. The reference information of the first device includes the information about the lane of the first device, so that information carried in the control frame is more fine-grained, and parameter auto-configuration in a unit of lane can be implemented, thereby improving the accuracy and the flexibility.

In a possible implementation, a plurality of first-channel segments are included between the first device and the second device, and that the first device executes the function of the first LT information and the function of the first extended information includes: The first device executes the function of the first LT information and the function of the first extended information in parallel for the plurality of first-channel segments. Therefore, strong coupling between processes of executing different functions is avoided, and there is no need to control a sequence of executing the function of the first LT information and the function of the first extended information for the plurality of first-channel segments, thereby reducing overheads. Even if an error occurs on some first channels in the plurality of first-channel segments in a process of executing a function, impact on another first channel can be avoided, so that a parameter auto-configuration process has a high degree of freedom in both space and time, and is very flexible.

In a possible implementation, the first device is at least one of a linear-drive pluggable optics (linear-drive pluggable optics, LPO) optical module, a half retimed (half retimed) module, a co-package optics (co-package optics, CPO) module, a near-package optics (near-package optics, NPO) module, an active electrical cable (active electrical cable, AEC) module, an active copper cable (active copper cable, ACC) module, or a passive direct attach cable (direct attach cable, DAC) module. The first device may be an active device or a passive device that is configured based on actual requirements, and has high applicability.

In a possible implementation, the LPO optical module, the CPO module, or the NPO module includes a microcontroller unit (microcontroller unit, MCU) configured with a digital/analog signal processing function chip. The method is applied to the MCU. Therefore, the LPO optical module, the CPO module, or the NPO module can implement, in an in-band manner, the method provided in this application, for example, parse the control frame and perform parameter auto-configuration, or for another example, fill the control frame without depending on an out-of-band interface. This helps improve the efficiency of the parameter auto-configuration and is relatively flexible.

In a possible implementation, the first device further includes a retimer. There may be a plurality of types of first devices, and cascading of the first devices is supported in this application based on actual requirements. This has strong universality.

In a possible implementation, the first function includes a basic function, and the second function includes a function other than the first function. Therefore, the function extension in the parameter auto-configuration process is implemented, so that scalability is improved.

According to a second aspect, a parameter auto-configuration method is provided. The method is applied to a second device included in a communication system, and the communication system further includes a first device. In the method, the second device generates a control frame, and sends the control frame to the first device. The control frame includes first LT information and first extended information, the first LT information is used to implement a first function of link training, the link training refers to training of a control parameter for a link between the first device and the second device, the first extended information includes at least one of AN information, second LT information, or LT control information, the AN information includes a parameter used for auto-negotiation between the first device and the second device, the second LT information is used to implement a second function of the link training, and the LT control information is used to control the link training. Therefore, parameter auto-configuration can be implemented between the second device and the first device. The parameter auto-configuration has high scalability, and makes auto-configured parameters richer and more accurate. The parameter auto-configuration is relatively flexible and comprehensive.

In a possible implementation, that the second device generates the control frame includes: The second device fills a register with the first LT information and the first extended information. The second device reads the register, and generates the control frame based on the read content. The register is filled, so that the second device can generate the control frame through an out-of-band interface. This has a low requirement on a capability of the second device, and is relatively flexible.

In a possible implementation, the control frame is an improved LT frame, the first LT information is in a control and status field of the improved LT frame, and the first extended information is in a PRBS field of the improved LT frame.

In a possible implementation, the control frame is a combination of an improved LT frame and a next frame of the improved LT frame, the first LT information is in a control and status field of the improved LT frame, and the first extended information is in the next frame of the improved LT frame.

In a possible implementation, the improved LT frame includes a first identifier, and the first identifier indicates that the next frame of the improved LT frame includes the first extended information.

In a possible implementation, the control frame is an improved AN frame, the first extended information includes the AN information, the AN information is on a base page of the improved AN frame, and information in the control frame other than the AN information is on a next page of the improved AN frame.

In a possible implementation, the base page of the improved AN frame includes a second identifier, and the second identifier indicates presence of the next page of the improved AN frame.

In a possible implementation, the control frame further includes second extended information, and the second extended information is different from the first extended information.

In a possible implementation, the second device is at least one of an LPO optical module, a half retimed module, a CPO module, an NPO module, an AEC module, an ACC module, or a passive DAC module.

In a possible implementation, the LPO optical module, the CPO module, or the NPO module includes a microcontroller unit configured with a digital/analog signal processing function chip, and the method is applied to the microcontroller unit.

In a possible implementation, the second device further includes a retimer.

In a possible implementation, the first function includes a basic function, and the second function includes a function other than the first function.

According to a third aspect, a parameter auto-configuration apparatus is provided. The apparatus is applied to a first device included in a communication system, the communication system further includes a second device, and the apparatus includes:
a receiving module, configured to receive a control frame sent by the second device, where the control frame includes first LT information and first extended information, the first LT information is used to implement a first function of link training, the link training refers to training of a control parameter for a link between the first device and the second device, the first extended information includes at least one of AN information, second LT information, or LT control information, the AN information includes a parameter used for auto-negotiation between the first device and the second device, the second LT information is used to implement a second function of the link training, and the LT control information is used to control the link training; and
an execution module, configured to execute the function of the first LT information and the function of the first extended information.

In a possible implementation, the control frame is an improved LT frame, the first LT information is in a control and status field of the improved LT frame, and the first extended information is in a PRBS field of the improved LT frame.

In a possible implementation, the control frame is a combination of an improved LT frame and a next frame of the improved LT frame, the first LT information is in a control and status field of the improved LT frame, and the first extended information is in the next frame of the improved LT frame.

In a possible implementation, the improved LT frame includes a first identifier, and the first identifier indicates that the next frame of the improved LT frame includes the first extended information.

In a possible implementation, the control frame is an improved AN frame, the first extended information includes the AN information, the AN information is on a base page of the improved AN frame, and information in the control frame other than the AN information is on a next page of the improved AN frame.

In a possible implementation, the base page of the improved AN frame includes a second identifier, and the second identifier indicates presence of the next page of the improved AN frame.

In a possible implementation, the control frame further includes second extended information, and the second extended information is different from the first extended information.

In a possible implementation, the apparatus further includes:
a filling module, configured to fill the control frame with reference information of the first device, to obtain an updated control frame; and
a sending module, configured to send the updated control frame to a third device that is in the communication system, where the updated control frame is used by the third device to execute a function of information included in the updated control frame.

In a possible implementation, the reference information, the first LT information, and the first extended information are in different fields of the updated control frame.

In a possible implementation, the reference information, the first LT information, and the first extended information are in a same field of the updated control frame, and the reference information is before or after the first LT information and the first extended information.

In a possible implementation, the reference information of the first device includes information about a transmission channel of the first device.

In a possible implementation, a plurality of first-channel segments are included between the first device and the second device. The execution module is configured to execute the function of the first LT information and the function of the first extended information in parallel for the plurality of first-channel segments.

In a possible implementation, the first device is at least one of an LPO optical module, a half retimed module, a CPO module, an NPO module, an AEC module, an ACC module, or a passive DAC module.

In a possible implementation, the LPO optical module, the CPO module, or the NPO module includes a microcontroller unit configured with a digital/analog signal processing function chip, and the apparatus is used in the microcontroller unit.

In a possible implementation, the first device further includes a retimer.

According to a fourth aspect, a parameter auto-configuration apparatus is provided. The apparatus is applied to a second device included in a communication system, the communication system further includes a first device, and the apparatus includes:
a generation module, configured to generate a control frame, where the control frame includes first LT information and first extended information, the first LT information is used to implement a first function of link training, the link training refers to training of a control parameter for a link between the first device and the second device, the first extended information includes at least one of AN information, second LT information, or LT control information, the AN information includes a parameter used for auto-negotiation between the first device and the second device, the second LT information is used to implement a second function of the link training, and the LT control information is used to control the link training; and
a sending module, configured to send the control frame to the first device.

In a possible implementation, the generation module is configured to: fill a register with the first LT information and the first extended information; and read the register, and generate the control frame.

In a possible implementation, the control frame is an improved LT frame, the first LT information is in a control and status field of the improved LT frame, and the first extended information is in a PRBS field of the improved LT frame.

In a possible implementation, the control frame is a combination of an improved LT frame and a next frame of the improved LT frame, the first LT information is in a control and status field of the improved LT frame, and the first extended information is in the next frame of the improved LT frame.

In a possible implementation, the improved LT frame includes a first identifier, and the first identifier indicates that the next frame of the improved LT frame includes the first extended information.

In a possible implementation, the control frame is an improved AN frame, the first extended information includes the AN information, the AN information is on a base page of the improved AN frame, and information in the control frame other than the AN information is on a next page of the improved AN frame.

In a possible implementation, the base page of the improved AN frame includes a second identifier, and the second identifier indicates presence of the next page of the improved AN frame.

In a possible implementation, the control frame further includes second extended information, and the second extended information is different from the first extended information.

In a possible implementation, the second device is at least one of an LPO optical module, a half retimed module, a CPO module, an NPO module, an AEC module, an ACC module, or a passive DAC module.

In a possible implementation, the LPO optical module, the CPO module, or the NPO module includes a microcontroller unit configured with a digital/analog signal processing function chip, and the apparatus is used in the microcontroller unit.

In a possible implementation, the second device further includes a retimer.

In a possible implementation, the first function includes a basic function, and the second function includes a function other than the first function.

According to a fifth aspect, a parameter auto-configuration method is provided. The method is applied to a first device included in a communication system, the communication system further includes a second device, the first device is located in a local device, and the second device is located in a remote device. In the method, the first device receives a control frame sent by the second device, where the control frame includes first LT information and first extended information, the first LT information is used to implement a function of link training, and the first extended information is used to implement a function between the local device and the remote device. The first device executes the function of the first LT information and the function of the first extended information.

This application provides a control frame. The control frame may not only carry the first LT information, but also carry the first extended information. The control frame has high scalability. Based on the control frame, the first device can execute the function of the first LT information, to obtain a control parameter for a link by training a first function of link training, and can also execute the function of the first extended information (to provide assistance, for example, to improve energy efficiency), so that function extension between the local device and the remote device is implemented based on the function of the first LT information, and the function extension can make auto-configured parameters between different devices richer and more accurate. The function extension is relatively flexible and comprehensive, and is applicable to complex scenarios with high requirements on parameter accuracy and auto-configuration efficiency, for example, complex scenarios in which there are a large quantity of devices and device types in a communication system.

In a possible implementation, the control frame is an improved LT frame, the first LT information is in a control and status field of the improved LT frame, and the first extended information is in a PRBS field of the improved LT frame.

In a possible implementation, the control frame is a combination of an improved LT frame and a next frame of the improved LT frame, the first LT information is in a control and status field of the improved LT frame, and the first extended information is in the next frame of the improved LT frame.

In a possible implementation, the improved LT frame includes a first identifier, and the first identifier indicates that the next frame of the improved LT frame includes the first extended information.

In a possible implementation, the control frame is an improved AN frame, the first extended information includes the AN information, the AN information is on a base page of the improved AN frame, and information in the control frame other than the AN information is on a next page of the improved AN frame.

In a possible implementation, the base page of the improved AN frame includes a second identifier, and the second identifier indicates presence of the next page of the improved AN frame.

In a possible implementation, the control frame further includes second extended information, and the second extended information is different from the first extended information.

After the first device receives the control frame sent by the second device, the method further includes: The first device fills the control frame with reference information of the first device, to obtain an updated control frame. The first device sends the updated control frame to a third device that is in the communication system, where the updated control frame is used by the third device to execute a function of information included in the updated control frame.

In a possible implementation, the reference information, the first LT information, and the first extended information are in different fields of the updated control frame.

In a possible implementation, the reference information, the first LT information, and the first extended information are in a same field of the updated control frame, and the reference information is before or after the first LT information and the first extended information.

In a possible implementation, the reference information of the first device includes information about a transmission channel of the first device.

In a possible implementation, a plurality of first-channel segments are included between the first device and the second device, and that the first device executes the function of the first LT information and the function of the first extended information includes: The first device executes the function of the first LT information and the function of the first extended information in parallel for the plurality of first-channel segments.

In a possible implementation, the first device is at least one of an LPO optical module, a half retimed module, a CPO module, an NPO module, an AEC module, an ACC module, or a passive DAC module.

In a possible implementation, the LPO optical module, the CPO module, or the NPO module includes a microcontroller unit configured with a digital/analog signal processing function chip, and the method is applied to the microcontroller unit.

In a possible implementation, the first device further includes a retimer.

According to a sixth aspect, a parameter auto-configuration method is provided. The method is applied to a second device included in a communication system, the communication system further includes a first device, the second device is located in a local device, and the first device is located in a remote device. The method includes: The second device generates a control frame, where the control frame includes first LT information and first extended information, the first LT information is used to implement a function of link training, and the first extended information is used to implement a function between the local device and the remote device. The second device sends the control frame to the first device.

In a possible implementation, the control frame is an improved LT frame, the first LT information is in a control and status field of the improved LT frame, and the first extended information is in a PRBS field of the improved LT frame.

In a possible implementation, the control frame is a combination of an improved LT frame and a next frame of the improved LT frame, the first LT information is in a control and status field of the improved LT frame, and the first extended information is in the next frame of the improved LT frame.

In a possible implementation, the improved LT frame includes a first identifier, and the first identifier indicates that the next frame of the improved LT frame includes the first extended information.

In a possible implementation, the control frame is an improved AN frame, the first extended information includes the AN information, the AN information is on a base page of the improved AN frame, and information in the control frame other than the AN information is on a next page of the improved AN frame.

In a possible implementation, the base page of the improved AN frame includes a second identifier, and the second identifier indicates presence of the next page of the improved AN frame.

In a possible implementation, the control frame further includes second extended information, and the second extended information is different from the first extended information.

In a possible implementation, the second device is at least one of an LPO optical module, a half retimed module, a CPO module, an NPO module, an AEC module, an ACC module, or a passive DAC module.

In a possible implementation, the LPO optical module, the CPO module, or the NPO module includes a microcontroller unit configured with a digital/analog signal processing function chip, and the method is applied to the microcontroller unit.

In a possible implementation, the second device further includes a retimer.

According to a seventh aspect, a parameter auto-configuration apparatus is provided. The apparatus is applied to a first device included in a communication system, the communication system further includes a second device, the first device is located in a local device, the second device is located in a remote device, and the apparatus includes a receiving module and an execution module. The receiving module is configured to perform a receiving step in the method provided in the fifth aspect and the corresponding possible implementations. The execution module is configured to perform a step other than the receiving step in the method provided in the fifth aspect and the corresponding possible implementations.

For example, the receiving module is configured to receive a control frame sent by the second device, where the control frame includes first LT information and first extended information, the first LT information is used to implement a function of link training, and the first extended information is used to implement a function between the local device and the remote device. The execution module is configured to execute the function of the first LT information and the function of the first extended information.

In a possible implementation, the control frame is an improved LT frame, the first LT information is in a control and status field of the improved LT frame, and the first extended information is in a PRBS field of the improved LT frame.

In a possible implementation, the control frame is a combination of an improved LT frame and a next frame of the improved LT frame, the first LT information is in a control and status field of the improved LT frame, and the first extended information is in the next frame of the improved LT frame.

In a possible implementation, the improved LT frame includes a first identifier, and the first identifier indicates that the next frame of the improved LT frame includes the first extended information.

In a possible implementation, the control frame is an improved AN frame, the first extended information includes the AN information, the AN information is on a base page of the improved AN frame, and information in the control frame other than the AN information is on a next page of the improved AN frame.

In a possible implementation, the base page of the improved AN frame includes a second identifier, and the second identifier indicates presence of the next page of the improved AN frame.

In a possible implementation, the control frame further includes second extended information, and the second extended information is different from the first extended information.

In a possible implementation, the apparatus further includes: a filling module, configured to fill the control frame with reference information of the first device, to obtain an updated control frame; and a sending module, configured to send the updated control frame to a third device that is in the communication system, where the updated control frame is used by the third device to execute a function of information included in the updated control frame.

In a possible implementation, the reference information, the first LT information, and the first extended information are in different fields of the updated control frame.

In a possible implementation, the reference information, the first LT information, and the first extended information are in a same field of the updated control frame, and the reference information is before or after the first LT information and the first extended information.

In a possible implementation, the reference information of the first device includes information about a transmission channel of the first device.

In a possible implementation, the execution module is configured to execute the function of the first LT information and the function of the first extended information in parallel for the plurality of first-channel segments.

In a possible implementation, the first device is at least one of an LPO optical module, a half retimed module, a CPO module, an NPO module, an AEC module, an ACC module, or a passive DAC module.

In a possible implementation, the LPO optical module, the CPO module, or the NPO module includes a microcontroller unit configured with a digital/analog signal processing function chip, and the apparatus is used in the microcontroller unit.

In a possible implementation, the first device further includes a retimer.

According to an eighth aspect, a parameter auto-configuration apparatus is provided. The apparatus is applied to a second device included in a communication system, the communication system further includes a first device, the second device is located in a local device, the first device is located in a remote device, and the apparatus includes a generation module and a sending module. The generation module is configured to perform a step other than a sending step in the method provided in the sixth aspect and the corresponding possible implementations. The sending module is configured to perform the sending step in the method provided in the sixth aspect and the corresponding possible implementations.

For example, the generation module is configured to generate a control frame, where the control frame includes first LT information and first extended information, the first LT information is used to implement a function of link training, and the first extended information is used to implement a function between the local device and the remote device.

The sending module is configured to send the control frame to the first device.

In a possible implementation, the control frame is an improved LT frame, the first LT information is in a control and status field of the improved LT frame, and the first extended information is in a PRBS field of the improved LT frame.

In a possible implementation, the control frame is a combination of an improved LT frame and a next frame of the improved LT frame, the first LT information is in a control and status field of the improved LT frame, and the first extended information is in the next frame of the improved LT frame.

In a possible implementation, the improved LT frame includes a first identifier, and the first identifier indicates that the next frame of the improved LT frame includes the first extended information.

In a possible implementation, the control frame is an improved AN frame, the first extended information includes the AN information, the AN information is on a base page of the improved AN frame, and information in the control frame other than the AN information is on a next page of the improved AN frame.

In a possible implementation, the base page of the improved AN frame includes a second identifier, and the second identifier indicates presence of the next page of the improved AN frame.

In a possible implementation, the control frame further includes second extended information, and the second extended information is different from the first extended information.

In a possible implementation, the second device is at least one of an LPO optical module, a half retimed module, a CPO module, an NPO module, an AEC module, an ACC module, or a passive DAC module.

In a possible implementation, the LPO optical module, the CPO module, or the NPO module includes a microcontroller unit configured with a digital/analog signal processing function chip, and the apparatus is used in the microcontroller unit.

In a possible implementation, the second device further includes a retimer.

According to a ninth aspect, a control frame is provided. The control frame includes first LT information and first extended information, the first LT information is used to implement a first function of link training, the link training refers to training of a control parameter for a link between a first device and a second device in a communication system, the first extended information includes at least one of AN information, second LT information, or LT control information, the AN information includes a parameter used for auto-negotiation between the first device and the second device, the second LT information is used to implement a second function of the link training, and the LT control information is used to control the link training.

In a possible implementation, the control frame is an improved LT frame, the first LT information is in a control and status field of the improved LT frame, and the first extended information is in a PRBS field of the improved LT frame.

In a possible implementation, the control frame is a combination of an improved LT frame and a next frame of the improved LT frame, the first LT information is in a control and status field of the improved LT frame, and the first extended information is in the next frame of the improved LT frame.

In a possible implementation, the improved LT frame includes a first identifier, and the first identifier indicates that the next frame of the improved LT frame includes the first extended information.

In a possible implementation, the control frame is an improved AN frame, the first extended information includes the AN information, the AN information is on a base page of the improved AN frame, and information in the control frame other than the AN information is on a next page of the improved AN frame.

In a possible implementation, the base page of the improved AN frame includes a second identifier, and the second identifier indicates presence of the next page of the improved AN frame.

In a possible implementation, the control frame further includes second extended information, and the second extended information is different from the first extended information.

According to a tenth aspect, a communication apparatus is provided. The communication apparatus includes a processor and a receiver. The receiver is configured to receive a control frame, and the processor is configured to process the control frame, to cause the communication apparatus to implement the parameter auto-configuration method provided in the first aspect or the fifth aspect, and the corresponding possible implementations.

According to an eleventh aspect, another communication apparatus is provided. The communication apparatus includes a processor and a transmitter. The processor is configured to generate a control frame, and the transmitter is configured to send the control frame, to cause the communication apparatus to implement the parameter auto-configuration method provided in the second aspect or the sixth aspect, and the corresponding possible implementations.

According to a twelfth aspect, a chip is provided. The chip includes an interface circuit and a control circuit. The interface circuit is configured to: receive and send data, and the control circuit is configured to process the data, to cause the device on which the chip is installed to implement the parameter auto-configuration method provided in the first aspect, the second aspect, the fifth aspect, or the sixth aspect and the corresponding possible implementations.

According to a thirteenth aspect, a communication system is provided. The communication system includes a first device and a second device. The first device is configured to implement the parameter auto-configuration method provided in the first aspect or the fifth aspect, and the corresponding possible implementations, the second device is configured to implement the parameter auto-configuration method provided in the second aspect or the sixth aspect, and the corresponding possible implementations.

It should be understood that, for technical effects achieved by the technical solutions provided in the second aspect to the thirteenth aspect and the corresponding possible implementations of this application, refer to the foregoing descriptions of the technical effects achieved by the technical solutions provided in the first aspect and the corresponding possible implementations. Details are not described herein again.

### BRIEF DESCRIPTION OF DRAWINGS

FIG. 1 is a diagram of a communication system according to an embodiment of this application;
FIG. 2 is a diagram of another communication system according to an embodiment of this application;
FIG. 3 is a diagram of still another communication system according to an embodiment of this application;
FIG. 4 is a diagram of a structure of a standard LT frame according to an embodiment of this application;
FIG. 5 is a diagram of a structure of a standard AN frame according to an embodiment of this application;
FIG. 6 is a diagram of a structure of a base page according to an embodiment of this application;
FIG. 7 is a diagram of a structure of a half retimed module according to an embodiment of this application;
FIG. 8 is a diagram of a structure of another half retimed module according to an embodiment of this application;
FIG. 9 is a diagram of a structure of an LPO optical module according to an embodiment of this application;
FIG. 10 is a diagram of a structure of another LPO optical module according to an embodiment of this application;
FIG. 11 is a flowchart of a parameter auto-configuration method according to an embodiment of this application;
FIG. 12 is a diagram of still another communication system according to an embodiment of this application;
FIG. 13 is a diagram of intra-frame embedding according to an embodiment of this application;
FIG. 14 is a diagram of inter-frame embedding according to an embodiment of this application;
FIG. 15 is a diagram of parsing and filling a control frame according to an embodiment of this application;
FIG. 16 is a schematic flowchart of parameter auto-configuration according to an embodiment of this application;
FIG. 17 is a schematic flowchart of performing parameter auto-configuration over a plurality of first-channel segments according to an embodiment of this application;
FIG. 18 is a schematic flowchart of another parameter auto-configuration according to an embodiment of this application;
FIG. 19 is another schematic flowchart of performing parameter auto-configuration over a plurality of first-channel segments according to an embodiment of this application;
FIG. 20 is still another schematic flowchart of performing parameter auto-configuration over a plurality of first-channel segments according to an embodiment of this application;
FIG. 21 is a flowchart of another parameter auto-configuration method according to an embodiment of this application;
FIG. 22 is a flowchart of still another parameter auto-configuration method according to an embodiment of this application;
FIG. 23 is a flowchart of yet another parameter auto-configuration method according to an embodiment of this application;
FIG. 24 is a diagram of a structure of a parameter auto-configuration apparatus according to an embodiment of this application;
FIG. 25 is a diagram of a structure of another parameter auto-configuration apparatus according to an embodiment of this application;
FIG. 26 is a diagram of a structure of still another parameter auto-configuration apparatus according to an embodiment of this application; and
FIG. 27 is a diagram of a structure of yet another parameter auto-configuration apparatus according to an embodiment of this application.

### DESCRIPTION OF EMBODIMENTS

Terms used in implementations of this application are merely used to explain specific embodiments of this application, but are not intended to limit this application.

In a communication system, different devices are connected through a channel, and the channel includes at least one of an optical channel or an electrical channel. Parameters between these devices need to be automatically configured. The parameters are used to establish a communication link between different devices, so that communication is completed between different devices over the communication link.

An embodiment of this application provides a communication system. The communication system includes at least two devices, and adjacent devices in the at least two devices are connected through an optical channel or an electrical channel. When the communication system includes the electrical channel but does not include the optical channel, the communication system may also be referred to as an electrical interconnection system. When the communication system includes the electrical channel and the optical channel, the communication system may also be referred to as an optoelectronic interconnection system. Devices in the communication system provided in embodiments of this application include but are not limited to the following several types.

A first type of device is a host chip (host chip), also referred to as a main chip in a device, and is connected to another device through an electrical channel. For example, the host chip includes but is not limited to a switch (switch) chip, a physical layer (physical, PHY) chip, and other chips. The PHY chip is, for example, an application-specific integrated circuit (application-specific integrated circuit, ASIC) chip.

A second type of device is an electrical interconnection device, and is connected to another device through an electrical channel. For example, the electrical interconnection device includes a direct attach cable (direct attach cable, DAC), and the DAC includes but is not limited to an active electrical cable (active electrical cable, AEC) module, an active copper cable (active copper cable, ACC) module, a passive direct attach cable DAC module, and other devices.

A third type of device is an optoelectronic interconnection device, is configured to perform photoelectric conversion, and is connected to another device through an optical channel, or is connected to another device through an optical channel and an electrical channel.

In some implementations, the optoelectronic interconnection device includes an optical module. For example, the optical module includes but is not limited to an optical digital signal processor (optical digital signal processor, oDSP) optical module, a linear-drive pluggable optics (linear-drive pluggable optics, LPO) optical module, a half retimed (half retimed) module, and other modules. The half retimed module is a retimed transmitter linear receiver (retimed transmitter linear receiver).

In some other implementations, the optoelectronic interconnection device includes a co-package optics (co-package optics, CPO) module, a near-package optics (near-package optics, NPO) module, and the like. An optical engine (optical engine, OE) and the host chip are jointly assembled, for example, jointly assembled on a substrate, to form a co-package of the OE and the host chip, so that the CPO module can be obtained. The OE and the host chip are separately assembled on the same printed circuit board (printed circuit board, PCB), to form a near package of the OE and the host chip, so that the NPO module can be obtained.

In still some other implementations, the optoelectronic interconnection device includes an active optical cable (active optical cable, AOC), and the AOC is obtained by integrating an optical module and an optical fiber.

A fourth type of device is a device other than the foregoing three types of devices, and functions as a relay, a drive, and the like. For example, the fourth type of device includes but is not limited to a retimer (retimer). This is not limited in embodiments of this application, and the fourth device may be flexibly set based on actual requirements.

In the communication system, the foregoing several types of devices may be located in different devices. The device is, for example, a switch or a network interface card (network interface card, NIC). For example, the communication system includes a local (local) device and a remote (remote) device. For ease of understanding, an embodiment of this application provides the following several types of communication systems for example description.

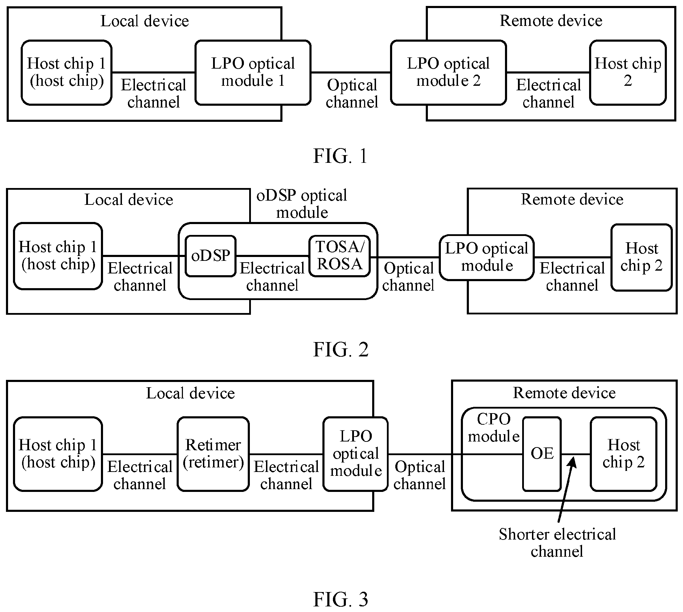

In a first type of communication system, as shown in FIG. 1, a local device includes a host chip 1 and an LPO optical module 1 that are connected through an electrical channel, a remote device includes a host chip 2 and an LPO optical module 2 that are connected through an electrical channel, and the LPO optical module 1 and the LPO optical module 2 are connected through an optical channel (for example, an optical fiber). The host chip 1 and the host chip 2 may be switch chips, PHY chips, or the like.

In a second type of communication system, as shown in FIG. 2, a local device includes a host chip 1 and an oDSP optical module that are connected through an electrical channel, a remote device includes a host chip 2 and an LPO optical module that are connected through an electrical channel, and the oDSP optical module and the LPO optical module are connected through an optical channel. This case is also referred to as mixed insertion of the oDSP optical module and the LPO optical module.

The oDSP optical module includes an oDSP, a first side of the oDSP is configured to connect to the host chip, and the first side may be referred to as a host side (host side); and a second side of the oDSP is configured to connect to a transmitter optical sub-assembly (transmitter optical sub-assembly, TOSA) and/or a receiver optical sub-assembly (receiver optical sub-assembly, ROSA), and the second side may be referred to as a media side (media side). Devices included on the host side and the media side are not limited in embodiments of this application. The first side is configured to communicate with the host chip through the electrical channel. For example, a serializer/deserializer (serializer/deserializer, serdes) located on the first side of the oDSP communicates, through an electrical channel, with a serdes (which is not shown in FIG. 2) located on the host chip. The second side is configured to communicate with the TOSA/ROSA through the electrical channel. In an implementation, the TOSA/ROSA is located in the oDSP optical module. The TOSA/ROSA communicates with the remote LPO optical module through the optical channel. Compared with the oDSP optical module, the LPO optical module does not have the oDSP. Because the LPO optical module does not have the oDSP, the host chip is required for optical/electrical channel compensation.

In a third type of communication system, as shown in FIG. 3, a local device includes a host chip 1, a retimer, and an LPO optical module that are sequentially connected through electrical channels, a remote device includes a CPO module, the CPO module includes an OE and a host chip 2, and the LPO optical module is connected to the CPO module through an optical channel. This case is also referred to as mixed insertion of the LPO optical module and the CPO module.

Certainly, the communication systems shown in FIG. 1 to FIG. 3 are merely examples, and are not intended to limit the communication system in embodiments of this application. In addition, in the communication system, a local device and a remote device are relative concepts. A communication device in the communication system is used as the local device, and another communication device that needs to establish a communication link is used as the remote device. For example, the foregoing local device and remote device may also be understood as a first communication device and a second communication device.

As described above, parameter auto-configuration needs to be performed between different devices in the communication system. Two related technologies, namely, a related technology 1 and a related technology 2, used to perform parameter auto-configuration are described herein.

In the related technology 1, a control parameter is obtained through training in a link training (link training, LT) process, to implement the parameter auto-configuration. For a device included in the communication system, the device includes at least one interface, each interface includes at least one unit, a link between different devices is used to connect interfaces that are on the devices, and a control parameter is a control parameter for the link.

For example, the unit in the interface includes a finite impulse response (finite impulse response, FIR) filter (filter), the FIR filter may be located in a transmitter (transmitter, TX) included in the interface, a parameter of the FIR filter includes an FIR coefficient, the FIR coefficient is a control parameter for the link.

For another example, the control parameter of the unit in the interface includes a preset (preset) parameter, and training of the preset parameter can affect a performance parameter. The performance parameter includes but is not limited to an extinction ratio (extinction ratio, ER) or an optical modulation amplitude (optical modulation amplitude, OMA).

For example, a control parameter for a link between a device A and a device B is trained. In an LT procedure in a transmission direction from the device A to the device B, the device A sends a standard LT frame to the device B via a TX of the device A, where the standard LT frame carries LT information and test information; and the device B can receive the standard LT frame via a receiver (receiver, RX) of the device B, and determine signal quality based on the test information in the standard LT frame. For example, the signal quality is measured by using a signal-to-noise ratio (signal-to-noise ratio, SNR), a bit error ratio (bit error ratio, BER), an eye pattern, or another manner. Then, the device B obtains, through training based on the signal quality and the LT information, a parameter used by a unit included in an interface that is on the device A, that is, a control parameter for a link, to improve signal quality. For example, the device B implements the LT procedure via an LT state machine that is in the device B. Certainly, a full-duplex mode is used between the device A and the device B, and an LT procedure is also performed in a transmission direction from the device B to the device A. Details are not described herein.

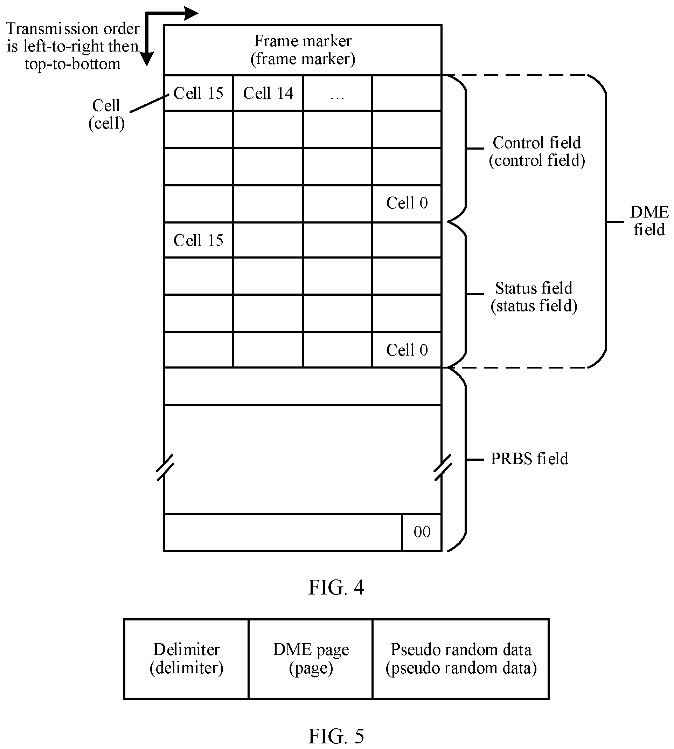

A frame structure of a standard LT frame shown in FIG. 4 is used as an example. Refer to FIG. 4. The standard LT frame includes a frame marker (frame marker), a differential Manchester encoding (differential Manchester encoding, DME) field, and a pseudo random code sequence (pseudo random binary sequence, PRBS) field. The frame marker is also referred to as an LT frame header. The DME field is used to carry LT information. The DME field is also referred to as a control and status field (including a control field (control field) and a status field (status field)). The control field and the status field each include 16 cells (cells), and a length of each cell is one octet. The PRBS field is used to carry test information, and the PRBS field is also referred to as a training pattern and zero pad (training pattern and zero pad) field.

In the related technology 2, a transmission parameter is obtained through negotiation in an auto-negotiation (auto-negotiation, AN) process, to implement parameter auto-configuration. The transmission parameter includes but is not limited to a rate parameter and a forward error correction (forward error correction, FEC) capability parameter. The rate parameter is, for example, 10G BASE-KR, where 10G BASE indicates that 10 gigabits per second (gigabits per second, Gbps) is used as a basis, and KR indicates a backplane. The FEC capability parameter is, for example, 25G RS-FEC, where 25G represents 25 Gbps, and RS represents Reed-Solomon (Reed-Solomon).

An example in which a parameter is auto-negotiated between a device A and a device B is used. In an AN process in a transmission direction from the device A to the device B, the device A sends a standard AN frame to the device B, where the standard AN frame carries a transmission parameter (that is, a parameter used for the auto-negotiation, namely, AN information) supported by the device A; and the device B can determine, from the standard AN frame, the transmission parameter supported by the device A, and with reference to a transmission parameter supported by the device B, a transmission parameter jointly supported by the device A and the device B is obtained through negotiation. The transmission parameter jointly supported by the device A and the device B (namely, the transmission parameter obtained through the auto-negotiation) is used in a subsequent communication process. For example, the device B implements the AN process via an AN state machine that is in the device B. A full-duplex mode is used between the device A and the device B, and an AN procedure is also performed in a transmission direction from the device B to the device A. Details are not described herein.

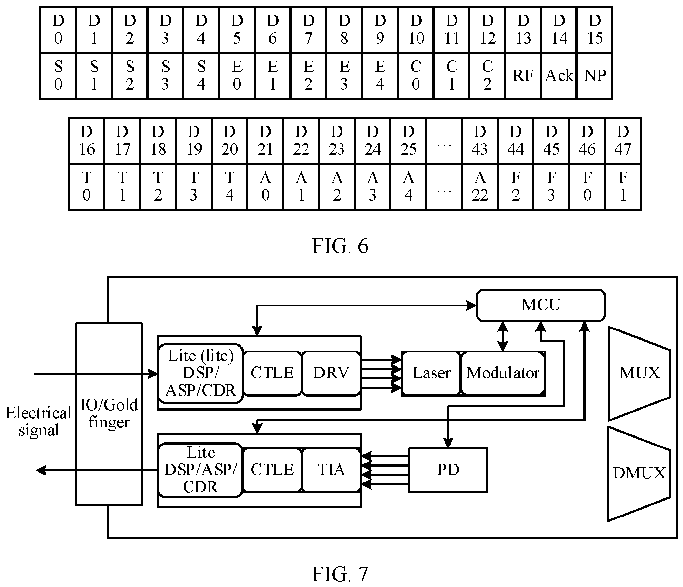

A frame structure of a standard AN frame shown in FIG. 5 is used as an example. Refer to FIG. 5. The frame structure of the standard AN frame includes a delimiter (delimiter), a DME page (page), and pseudo random data (pseudo random data). The delimiter is also referred to as an AN frame header or a Manchester violation delimiter (Manchester violation delimiter). The DME page is used to carry AN information. The DME page includes at least a base page (base page), and optionally, further includes a next page (next page). The next page includes a message (message) type and an unformatted (unformatted) type. For a structure of the base page, refer to FIG. 6. D0 to D47 are 48 pieces of valid data (namely, AN information), a length of each piece of valid data is 2 bits, D15 is an NP field, and the NP field indicates whether the next page is present after the base page.

In the related technology 1, only the independent LT procedure is used, and auto-configured parameters are undiversified, resulting in poor scalability. In addition, the standard LT frame can carry the LT information only via the control and status field. Because a length of the control and status field is limited and fixed, the LT information that can be carried is limited, resulting in poor scalability. In addition, when a plurality of devices exist in a communication system, LT procedures between the plurality of devices are serial, and controlling the serialization of the LT procedures requires high overheads. In addition, if a fault occurs in a specific LT procedure, restart needs to be performed from a 1^{st} LT procedure, resulting in a low fault tolerance rate and low efficiency.

In the related technology 2, only the independent AN process is used, and auto-configured parameters are undiversified, resulting in poor scalability. When there are a plurality of devices in a communication system, AN processes between the plurality of devices are serial, and controlling the serialization of the AN processes requires high overheads. In addition, if a fault occurs in a specific AN process, restart needs to be performed from a 1^{st} AN process, resulting in a low fault tolerance rate and low efficiency.

It can be learned that, regardless of the related technology 1 or the related technology 2, the auto-configured parameters are limited, and information available for reference is insufficient. This affects the accuracy of the auto-configured parameters and the efficiency of the auto-configuration process, making it difficult to adapt to complex scenarios such as mixed insertion scenarios (for example, the second communication system and the third communication system as examples mentioned above) and downward compatibility with different fiber lengths because these complex scenarios have high requirements on parameter accuracy and auto-configuration efficiency. In addition, in actual application, an AN procedure is usually fixedly performed first, and an LT procedure is then fixedly performed, which is not flexible enough.

An embodiment of this application provides a parameter auto-configuration method. The method is applied to a first device that is in a communication system, and the first device is at least one of all devices that are in the communication system.

Examples of several types of architectures of the first device are described by using an example in which the first device is the foregoing third type of device, namely, an optoelectronic interconnection device.

In a first type of architecture, the first device is an oDSP optical module, the oDSP optical module includes an internal microcontroller unit (microcontroller unit, MCU) and an oDSP, and the oDSP optical module may implement, via the MCU and the oDSP, the method provided in embodiments of this application.

In a second type of architecture, the first device is a half retimed (half retimed) module.

In some implementations, refer to FIG. 7. The half retimed module can include a lite (lite) digital signal processor (digital signal processor, DSP), an analog signal processor (analog signal processor, ASP), or a clock and data recovery (clock and data recovery, CDR) function in any transmission direction. In this case, the half retimed module includes but is not limited to the lite DSP/ASP/CDR, an MCU, a continuous time linear equalizer (continuous time linear equalizer, CTLE), a driver (driver, DRV), a trans-impedance amplifier (trans-impedance amplifier, TIA), a laser (laser), a modulator (modulator), a photo detector (photo detector, PD), a multiplexer (multiplexer, MUX), and a demultiplexer (demultiplexer, DEMUX). The half retimed module may implement, via the lite DSP/ASP/CDR, the method provided in embodiments of this application.

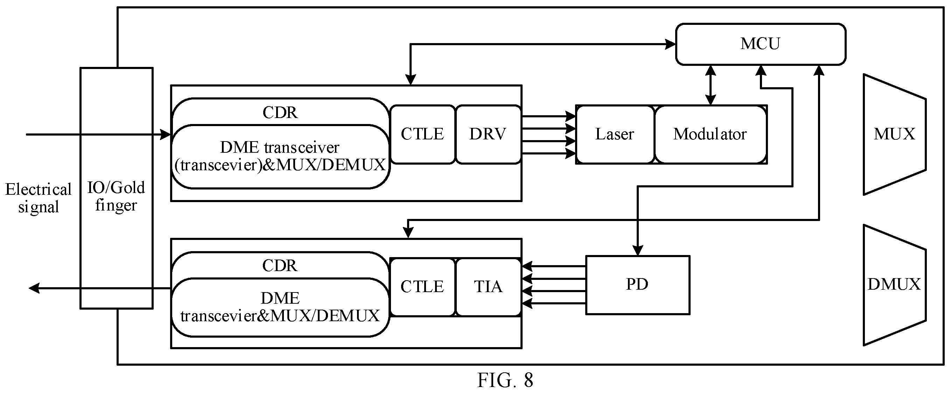

In some other implementations, refer to FIG. 8. The half retimed module can include, in any transmission direction, a CDR configured with a DME transceiver (transceiver) and a MUX/DEMUX. In this case, the half retimed module includes but is not limited to the CDR (configured with the DME transceiver&MUX/DEMUX), an MCU, a CTLE, a DRV, a TIA, a laser, a modulator, a PD, a MUX, and a DEMUX. The half retimed module may implement, via the CDR (configured with the DME transceiver&MUX/DEMUX), the method provided in embodiments of this application.

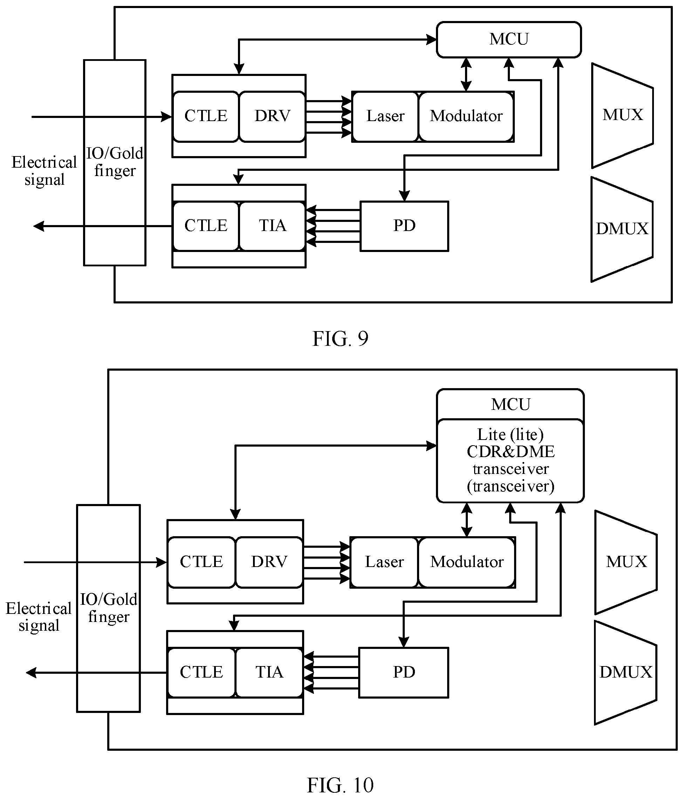

In a third type of architecture, the first device is an LPO optical module, and the LPO optical module may be of a standard architecture shown in FIG. 9. The LPO optical module of the standard architecture includes but is not limited to an MCU, a CTLE, a DRV, a TIA, a laser, a modulator, a PD, a MUX, and a DEMUX. The LPO optical module of the standard architecture is connected to a control system through a common management interface specification (common management interface specification, CMIS) interface, and implements, based on control of the control system, the method provided in embodiments of this application.

The CMIS interface is an out-of-band interface, and out-of-band means non-channel-associated. In addition to the CMIS interface, an interface like a peripheral component interconnect express (peripheral component interconnect express, PCIe) interface, a management data input/output (management data input/output, MDIO) interface, or an inter-integrated circuit (inter-integrated circuit, IIC or I2C) interface may be further used in embodiments of this application. This is not limited herein.

In some implementations, the control system includes an off-chip processor (including but not limited to a central processing unit (central processing unit, CPU)) or a main control board, and is implemented by using software. This is relatively flexible.

In some other implementations, the control system includes a device in a host chip, for example, an MCU integrated in the host chip. This is not limited in embodiments of this application.

In an example embodiment, when the CMIS interface or the like is connected to the control system, the method provided in embodiments of this application is implemented in cooperation with a register. The register is configured to store content of a control frame provided in embodiments of this application (the content of the control frame is described in detail in the following method embodiments). That the first device implements, via the control system or the like, the method provided in embodiments of this application means that at least one operation of reading or writing is performed on the register via the control system, to implement the method provided in embodiments of this application.

In a fourth type of architecture, the first device is an LPO optical module, and the LPO optical module may be of an improved architecture shown in FIG. 10. In the improved architecture, firmware (firmware), for example, a digital/analog signal processing function chip, as a co-processor (co-processor) of an MCU is added to the standard architecture shown in FIG. 9, to form the MCU configured with the digital/analog signal processing function chip, so that the method provided in embodiments of this application is implemented via the MCU configured with the digital/analog signal processing function chip, thereby reducing dependency on software. For example, the digital/analog signal processing function chip is a lite CDR&DME transceiver shown in FIG. 10.

For example, the digital/analog signal processing function chip may be integrated into the MCU, or may be located in at least one of a CTLE or a laser and invoked by the MCU. A deployment location of the digital/analog signal processing function chip in the LPO optical module is not limited in embodiments of this application.

For example, in the fourth type of architecture, an example in which the first device is the LPO optical module is used for description. When the first device is a CPO module or an NPO module, the CPO module or the NPO module may alternatively include an MCU configured with a digital/analog signal processing function chip, and the method provided in embodiments of this application is implemented via the MCU configured with the digital/analog signal processing function chip.

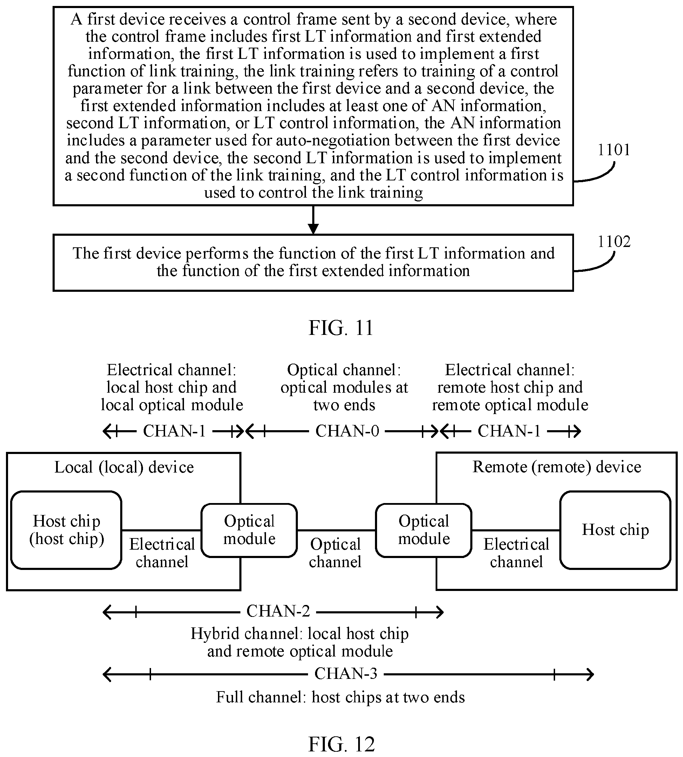

As shown in FIG. 11, a parameter auto-configuration method provided in this embodiment of this application includes the following step 1101 and step 1102.

Step 1101: A first device receives a control frame sent by a second device, where the control frame includes first LT information and first extended information, the first LT information is used to implement a first function of link training, the link training refers to training of a control parameter for a link between the first device and the second device, the first extended information includes at least one of AN information, second LT information, or LT control information, the AN information includes a parameter used for auto-negotiation between the first device and the second device, the second LT information is used to implement a second function of the link training, and the LT control information is used to control the link training.

The second device is any device in all devices included in a communication system other than the first device, and the first device is connected to the second device through at least one of an electrical channel and an optical channel. The optical channel is used as an example. The optical channel includes but is not limited to an optical fiber. A quantity of optical fibers between the first device and the second device is not limited in embodiments of this application. In addition, a quantity of devices included between the first device and the second device is not limited in embodiments of this application. No device may be included between the first device and the second device, or one device may be included, or a plurality of cascaded devices may be included. The plurality of cascaded devices may alternatively be connected through at least one of an electrical channel and an optical channel.

A communication system shown in FIG. 12 is used as an example. A first device and a second device include but are not limited to the following several combinations.

In a first combination, both the first device and the second device are optical modules, the first device and the second device are located in different devices, and an optical channel exists between the first device and the second device, and is denoted as a channel 0 (shown as CHAN-0 in FIG. 12).

In a second combination, one of the first device and the second device is an optical module, the other one of the first device and the second device is a host chip, the first device and the second device are located in a same device, and an electrical channel exists between the first device and the second device, and is denoted as a channel 1 (shown as CHAN-1 in FIG. 12).

In a third combination, one of the first device and the second device is an optical module, the other one of the first device and the second device is a host chip, the first device and the second device are located in different devices, and an optical channel and an electrical channel exist between the first device and the second device, and are denoted as a channel 2 (shown as CHAN-2 in FIG. 12). The channel 2 is also referred to as a hybrid channel.

In a fourth combination, both the first device and the second device are host chips, the first device and the second device are located in different devices, and an optical channel and an electrical channel exist between the first device and the second device, and are denoted as a channel 3 (shown as CHAN-3 in FIG. 12). The channel 3 is also referred to as a full channel.

For example, after receiving a control frame sent by the second device, the first device may parse the control frame in an in-band manner, or may write content of the control frame into a register, and a control system reads the content of the control frame from the register through an out-of-band CMIS interface or the like, and parses the control frame. In embodiments of this application, the content of the control frame includes but is not limited to the first LT information and the first extended information. The first extended information includes at least one of the AN information, the second LT information, or the LT control information.

The first LT information is used to implement the first function of the link training, and the link training refers to the training of the control parameter for the link between the first device and the second device. The first function is a function for obtaining the control parameter through training, and the first function includes a basic function. In this case, after the first function of the link training is implemented based on the first LT information, the control parameter obtained through the training is a basic parameter or a traditional parameter, and the traditional parameter includes but is not limited to the FIR coefficient in the foregoing related technology 1, the preset parameter used to affect the ER/OMA, and the like.

The AN information in the first extended information includes a parameter used for auto-negotiation between the first device and the second device. For example, the AN information may include the information described in the foregoing related technology 2 as an example, and may further include another parameter used for auto-negotiation.

For the LT control information in the first extended information, the LT control information is used to control the link training, for example, is used to determine information that is allowed to be trained in a link training (namely, LT) procedure in an ideal case, for example, is used to determine an initial value of the information that is allowed to be trained in the LT procedure in the ideal case.

The information that is allowed to be trained in the LT procedure in the ideal case includes at least one of the following: an equalization coefficient of a TX/RX, pre-emphasis, drive voltage swing (for example, drive voltage swing of a driver), differential swing, a common-mode voltage, drive current (for example, a drive current of a laser) impedance, a frequency offset, jitter, an automatic gain control (automatic gain control, AGC) coefficient, a CTLE coefficient, a DSP coefficient, an ASP coefficient, a decision feedback equalizer (decision feedback equalizer, DFE) coefficient, a float (float) feed forward equalizer (feed forward equalizer, FFE) coefficient, a non-linear effect equalizer (non-linear effect equalizer, NLE) coefficient, a bandwidth, polarization, an optical wavelength, a linewidth spectrum, a transmission channel swap (lane swap) coefficient of an electrical channel, differential pair polarity (polarity) reversal of the electrical channel, skew (skew) of a device and the electrical channel, a codec mode (such as FEC interleaving or precoding (precoding), which can affect energy efficiency between different devices), power, an effective number of bits (effective number of bits, ENOB) of an analog-to-digital converter (analog-to-digital converter, ADC), a DME codec baud rate (which can affect an oversampling mechanism, for example, an initial high BER state), a digital pre-distortion (digital pre-distortion, DPD) coefficient, a thermo electric cooler (thermo electric cooler, TEC) coefficient, total harmonic distortion (total harmonic distortion, THD) of the device, I/Q mismatch of the device, baseline drift of the device, temperature drift of the device, an insertion loss of the electrical channel, a return loss of the electrical channel, crosstalk of the electrical channel, attenuation of the optical channel, a return loss of the optical channel, dispersion of the optical channel, nonlinearity of the optical channel, a group delay of the optical channel, a bias (bias, for example, a bias of a modulator), and the like.

Correspondingly, the LT control information may include information used to determine the foregoing information. For example, the LT control information includes but is not limited to at least one of the following: an editable test code pattern used for optical/electrical channel estimation (for example, used to estimate the return loss of the electrical channel and attenuation of the optical channel), timestamp information used for optical channel group delay estimation, and pilot information used for a frequency offset and jitter estimation. Examples are not provided herein one by one.

For example, the LT control information may further include other information, for example, check information used for frame check and retransmission control. This is set based on actual requirements, and is not limited herein.

The second LT information in the first extended information is used to implement the second function of the link training. The second function is a function for obtaining a control parameter through training. In embodiments of this application, the second function is different from the first function, or the second function includes a function other than the first function. A control parameter (denoted as a second control parameter) obtained through training by implementing the second function of the link training based on the second LT information is different from a control parameter (denoted as a first control parameter) obtained by implementing the first function of the link training based on the first LT information. In this case, that the second control parameter is different from the first control parameter includes but is not limited to the following several cases.

In a first case, the second control parameter and the first control parameter are different types of basic parameters for a same object.

It can be learned from the foregoing descriptions of the related technology 1 that the device in the communication system includes at least one interface. For example, the at least one interface is a binding (binding) interface. The same object herein may refer to a same interface, and different objects below may refer to different interfaces.

For example, traditional parameters include a traditional parameter 1 to a traditional parameter 6. After the first function of the link training is implemented based on the first LT information, obtained control parameters are a traditional parameter 1 to a traditional parameter 3 of an interface 1. After the second function of the link training is implemented based on the second LT information, obtained control parameters are a traditional parameter 4 to a traditional parameter 6 of the interface 1.

In a second case, the second control parameter and the first control parameter are a same type of basic parameters for different objects.

For example, traditional parameters include a traditional parameter 1 to a traditional parameter 6. After the first function of the link training is implemented based on the first LT information, obtained control parameters are a traditional parameter 1 to a traditional parameter 3 of an interface 1. After the second function of the link training is implemented based on the second LT information, obtained control parameters are a traditional parameter 1 to a traditional parameter 3 of an interface 2.

In a third case, the second control parameter and the first control parameter are different types of basic parameters for different objects.

For example, traditional parameters include a traditional parameter 1 to a traditional parameter 6. After the first function of the link training is implemented based on the first LT information, obtained control parameters are a traditional parameter 1 to a traditional parameter 3 of an interface 1. After the second function of the link training is implemented based on the second LT information, obtained control parameters are a traditional parameter 4 to a traditional parameter 6 of an interface 2.

In a fourth case, the second control parameter is an extended parameter or a non-traditional parameter, and the first control parameter is a basic parameter.

In an example embodiment, the extended parameter includes but is not limited to the following several types.

A first type is an adjustable range corresponding to information that is allowed to be trained in a link training (namely, LT) procedure in an ideal case, and is used to determine, from the information that is allowed to be trained in the LT procedure in the ideal case, information that can be trained in the LT procedure in an actual case. For example, the first type is an adjustable range corresponding to pre-emphasis or an adjustable range corresponding to differential swing.

If an adjustable range corresponding to information is less than a reference threshold, it is determined that the information is information that cannot be trained in the LT procedure in the actual case. If a conditional range corresponding to information is greater than or equal to a reference threshold, it is determined that the information is information that can be trained in the LT procedure in the actual case. An adjustable range corresponding to information includes an upper limit and a lower limit. That the adjustable range corresponding to the information is less than the reference threshold means that a difference between the upper limit and the lower limit is less than the reference threshold.

Certainly, for one piece of information, a case in which whether the information is information that can be trained in the LT procedure in the actual case is determined based on an adjustable range corresponding to the information is merely used as an example. In embodiments of this application, whether the information is the information that can be trained in the LT procedure in the actual case may alternatively be determined based on actual requirements and another feature of the information.

A second type is information that can be trained in an LT procedure in an actual case, for example, a value of information that can be trained in the LT procedure in the actual case.

For example, the extended parameter includes but is not limited to at least one of the following: a compensation amount for an equalization coefficient of a TX/RX, a compensation amount for pre-emphasis, a compensation amount for drive voltage swing, a compensation amount for differential swing, a compensation amount for a common-mode voltage, a compensation amount for a drive current, a compensation amount for impedance, a compensation amount for a frequency offset, a compensation amount for jitter, a compensation amount for an AGC coefficient, a compensation amount for a CTLE coefficient, a compensation amount for a DSP coefficient, a compensation amount for an ASP coefficient, a compensation amount for a DFE coefficient, a compensation amount for a float FFE coefficient, a compensation amount for an NLE coefficient, a compensation amount for a bandwidth, a compensation amount for polarization, a compensation amount for an optical wavelength, a compensation amount for a linewidth spectrum, a compensation amount for a lane swap coefficient, a compensation amount for differential pair polarity reversal, a compensation amount for skew, a codec mode, a compensation amount for power, a compensation amount for an ENOB of an ADC, a DME codec baud rate, a compensation amount for DPD, a compensation amount for RLM, a compensation amount for temperature drift, a compensation amount for a TEC, a compensation amount for THD, a compensation amount for I/Q mismatch, a compensation amount for baseline drift, a compensation amount for temperature drift, a compensation amount for an insertion loss, a compensation amount for a return loss, a compensation amount for crosstalk, a compensation amount for attenuation, a compensation amount for a return loss, a compensation amount for dispersion, a compensation amount for nonlinearity, a compensation amount for a group delay, a compensation amount for a bias, and the like.

A third type is an obtained specified training manner selected from optional training manners. For example, the third type is one preset determined from a plurality of presets (preset), one adjustable parameter training combination determined from a plurality of adjustable parameter training combinations, one parameter adjustment range determined from a plurality of parameter adjustment ranges, or one step determined from a plurality of steps. The adjustable parameter training combination indicates a parameter type that needs to be adjusted for a device. For example, there are a device 1, a device 2, and parameter types 1-3 that need to be adjusted: pre-emphasis, differential swing, and a common-mode voltage. One adjustable parameter training combination is a parameter type 1 (pre-emphasis) corresponding to the device 1 and parameter types 2-3 (differential swing and a common-mode voltage) corresponding to the device 2. Another adjustable parameter training combination is parameters 1-2 (pre-emphasis and differential swing) corresponding to the device 2 and a parameter 3 (a common-mode voltage) corresponding to the device 2. The parameter adjustment range may include a subset of an adjustable range corresponding to the foregoing information.

For example, in the fourth case, the second control parameter and the first control parameter may be for a same object, or may be for different objects. This is not limited in embodiments of this application.

The foregoing describes various types of information that may be included in the control frame. The information in the control frame includes but is not limited to the following several combinations.

In a first combination case, the first extended information is the AN information, and the control frame includes the first LT information and the AN information. Basic parameters can be obtained through training based on the first LT information, and auto-negotiation of transmission parameters can be implemented based on the AN information, so that an LT procedure and an AN procedure are integrated. In this way, a parameter auto-configuration process is relatively flexible. When training is performed in the LT procedure, reference may be made to the transmission parameters obtained through auto-negotiation in the AN procedure; and when the auto-negotiation is performed in the AN procedure, reference may also be made to the basic parameters obtained through the training in the LT procedure. This improves the accuracy of the auto-configured parameters and the efficiency of the auto-configuration process, and is applicable to complex scenarios with high requirements on the parameter accuracy and auto-configuration efficiency.

In a second combination case, the first extended information is the second LT information, and the control frame includes the first LT information and the second LT information. Basic parameters can be obtained through training based on the first LT information. Based on these basic parameters, richer control parameters can be obtained through training based on the second LT information, so that more functions of the link training are implemented. In this way, scalability of a parameter auto-configuration process is high.

In a third combination case, the first extended information is the LT control information, and the control frame includes the first LT information and the LT control information. Basic parameters can be obtained through training based on the first LT information, and the link training can be controlled based on the LT control information, to assist an LT procedure. This helps improve the efficiency of the LT procedure and the accuracy of the basic parameters obtained through the training.

In a fourth combination case, the first extended information includes the AN information and the second LT information, and the control frame includes the first LT information, the AN information, and the second LT information.

Basic parameters can be obtained through training based on the first LT information. Based on these basic parameters, richer control parameters can be obtained through training based on the second LT information, and auto-negotiation of transmission parameters can be implemented based on the AN information, so that an LT procedure and an AN procedure are integrated. In this way, a parameter auto-configuration process is relatively flexible. When training is performed in the LT procedure, reference may be made to the transmission parameters obtained through auto-negotiation in the AN procedure; and when the auto-negotiation is performed in the AN procedure, reference may also be made to the basic parameters obtained through the training in the LT procedure and the richer control parameters. This improves the accuracy of the auto-configured parameters and the efficiency of the auto-configuration process, and has a wide application scope.

In a fifth combination case, the first extended information includes the AN information and the LT control information, and the control frame includes the first LT information, the AN information, and the LT control information. Basic parameters can be obtained through training based on the first LT information, auto-negotiation of transmission parameters can be implemented based on the AN information, and the link training can be controlled based on the LT control information, to assist an LT procedure. This helps improve the efficiency of the LT procedure and the accuracy of the basic parameters obtained through the training. In this way, an LT procedure and an AN procedure are integrated, so that a parameter auto-configuration process is relatively flexible. When training is performed in the LT procedure, reference may be made to the transmission parameters obtained through auto-negotiation in the AN procedure; and when the auto-negotiation is performed in the AN procedure, reference may also be made to the more accurate basic parameters obtained through the training in the LT procedure. This improves the accuracy of the auto-configured parameters and the efficiency of the auto-configuration process.

In a sixth combination case, the first extended information includes the second LT information and the LT control information, and the control frame includes the first LT information, the second LT information, and the LT control information. Basic parameters can be obtained through training based on the first LT information. Based on these basic parameters, richer control parameters can be obtained through training based on the second LT information, so that scalability of a parameter auto-configuration process is high, and link training can be controlled based on the LT control information, to assist an LT procedure, thereby helping improve the efficiency of the LT procedure and the accuracy of the basic parameters and richer control parameters that are obtained through training.

In a seventh combination case, the first extended information includes the AN information, the second LT information, and the LT control information, and the control frame includes the first LT information, the AN information, the second LT information, and the LT control information. Basic parameters can be obtained through training based on the first LT information, and richer control parameters can be obtained through training based on the second LT information. In addition, due to presence of the LT control information, both the basic parameters and the richer control parameters have high accuracy. When training is performed in an LT procedure, reference may be made to a transmission parameter obtained through auto-negotiation in an AN procedure. When the auto-negotiation is performed in the AN procedure, reference may also be made to the accurate and rich control parameters obtained through the training in the LT procedure. This improves the accuracy of the auto-configured parameters and the efficiency of parameter auto-configuration.

In an example embodiment, a format of the control frame includes but is not limited to the following several types.

A first type of format is an intra-frame embedding manner in which an LT frame is used as a carrier. The control frame is an improved LT frame, the first LT information is in a control and status field of the improved LT frame, and the first extended information is in a PRBS field of the improved LT frame.

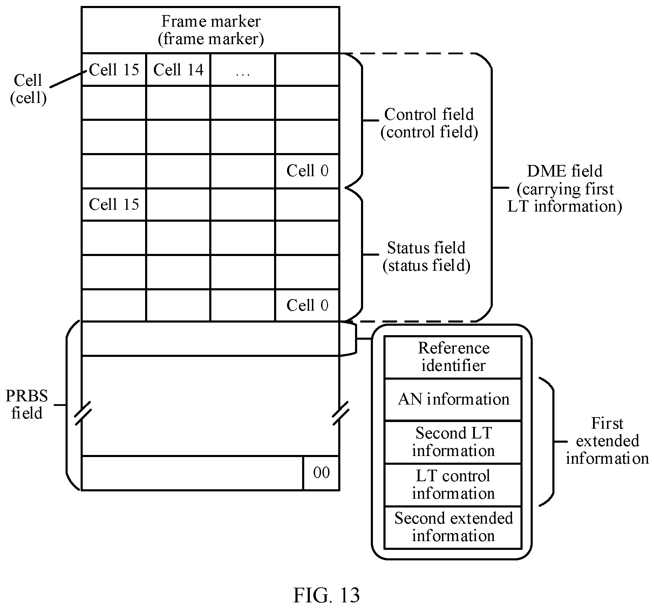

FIG. 4 shows a standard LT frame. The standard LT frame carries first LT information in only a control and status field, and a PRBS field does not carry any LT information, AN information, or LT control information. In this embodiment of this application, the PRBS field of the standard LT frame is extended, so that the PRBS field can carry first extended information. In this way, space of the PRBS field is fully used, so that an improved LT frame is obtained. Refer to FIG. 13. An improved LT frame includes a frame header, a DME field (including a control field and a status field), and a PRBS field, where the DME field carries first LT information, and the PRBS field carries first extended information. In FIG. 13, an example in which the first extended information includes AN information, second LT information, and LT control information is used for presentation, and constitutes no limitation on embodiments of this application. For example, in addition to the first extended information, the PRBS field may further carry a reference identifier. The reference identifier indicates that the PRBS field carries the first extended information.

A second format is an inter-frame embedding manner in which an LT frame is used as a carrier. The control frame is a combination of an improved LT frame and a next frame of the improved LT frame, the first LT information is in a control and status field of the improved LT frame, and the first extended information is in the next frame of the improved LT frame.

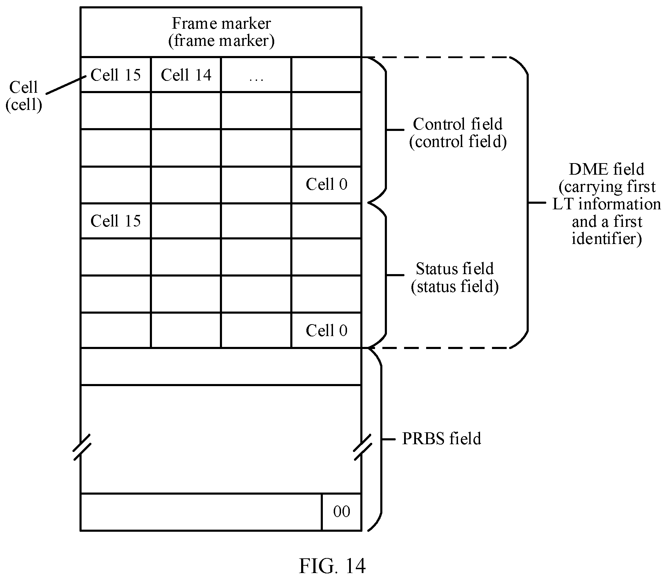

In some implementations, a first identifier is added to a standard LT frame. For example, refer to FIG. 14. A first identifier is added to a reserved cell in a control field or a status field of a standard LT frame, so that an improved LT frame is obtained. The improved LT frame includes a first identifier, the first identifier indicates that a next frame of the improved LT frame includes first extended information. For example, when a value of the first identifier is a first value, it indicates that the next frame of the improved LT frame includes the first extended information; or when a value of the first identifier is a second value, it indicates that the next frame of the improved LT frame does not include the first extended information. The second value is different from the first value, and values of the second value and the first value are not limited in embodiments of this application. The first device and the second device may distinguish between the improved LT frame (carrying first LT information) and the next frame (carrying the first extended information) of the improved LT frame based on the value of the first identifier.

In some other implementations, the first LT information is in a control and status field of a standard LT frame, and the first extended information is in a next frame of the standard LT frame. The first device and the second device may consider by default that the next frame of the standard LT frame carries the first extended information, to distinguish between the standard LT frame (carrying the first LT information) and the next frame (carrying the first extended information) of the standard LT frame.

For example, the next frame may be a standard LT frame, an improved LT frame, a physical coding sublayer (physical coding sublayer, PCS) codeword, or an FEC layer codeword. The FEC layer codeword is, for example, an FEC padding (padding) frame. A frame format of the next frame is not limited in embodiments of this application, provided that an appropriate frame is selected as the next frame based on actual requirements.

In a third type of format, the control frame is an improved AN frame, the first extended information includes the AN information, the AN information is on a base page of the improved AN frame, and information in the control frame other than the AN information is on a next page of the improved AN frame.

FIG. 5 shows a standard AN frame. A DME page of the standard AN frame includes a base page and a next page, but the base page and the next page are used to carry only AN information. In embodiments of this application, a function of the next page is extended. In this way, the next page can carry information in a control frame other than the AN information, so that an improved AN frame is obtained. The next page may be at least one of a message type or an unformatted type. This is not limited in embodiments of this application.

For example, the base page of the improved AN frame includes a second identifier, and the second identifier indicates presence of a next page of the improved AN frame. For example, the second identifier may be an NP bit in the base page. For example, when a value of the second identifier is a third value, it indicates presence of the next page of the improved AN frame; or when a value of the second identifier is a fourth value, it indicates that no next page of the improved AN frame is present. The third value is different from the fourth value, and values of the third value and the fourth value are not limited in embodiments of this application.

In an example embodiment, the improved AN frame provided in the third format is alternatively applicable to a case in which no first LT information is present. For example, the AN information is in the base page of the improved AN frame, and at least one of the LT control information or the second LT information is in the next page of the improved AN frame. In this case, integration of the LT procedure and the AN procedure can also be implemented. This improves the accuracy of the auto-configured parameters and the efficiency of the auto-configuration process.

For example, for the first format to the third format, when the first extended information includes the second LT information, the second LT information may include the frame marker and the DME field shown in FIG. 4. For example, the second LT information may be carried in the PRBS field in the format of the DME field shown in FIG. 4, and the frame marker is included before the second LT information. When the first extended information includes the AN information, the AN information may include 48 pieces of valid data. For example, the AN information may be carried in the format of the DME page shown in FIG. 5. The DME page may include a base page, or include a base page and a next page. The base page and the next page each include 48 pieces of valid data.

The foregoing describes, by using examples, a case in which the control frame includes the first LT information and the first extended information. In an example embodiment, refer to FIG. 13. The control frame further includes second extended information, and the second extended information is different from the first extended information. The second extended information is not limited in embodiments of this application. The second extended information may be any information that is determined based on actual requirements and that is different from the first extended information. The second extended information can be flexibly customized in embodiments of this application.

For example, each type of information included in the first extended information may include second extended information. For example, the second LT information included in the first extended information may include second extended information, the AN information included in the first extended information may include second extended information, and the LT control information included in the first extended information may also include second extended information. Alternatively, different information included in the first extended information is combined, and obtained combined information includes second extended information. For example, the second LT information and the LT control information that are included in the first extended information are combined to obtain combined information, and the combined information includes second extended information.

In some implementations, the second extended information and the first extended information are in a same field of the control frame, and the second extended information is before or after the first extended information. When the second extended information is before the first extended information, in a process of transmitting the control frame, the second extended information is first transmitted, and the first extended information is then transmitted. When the second extended information is after the first extended information, in a process of transmitting the control frame, the first extended information is first transmitted, and the second extended information is then transmitted. For example, the second extended information is after the first extended information. In embodiments of this application, the second extended information may be carried in a next page manner, so that the second extended information is after the first extended information. For example, the second LT information includes second extended information. A next page may be present after the second LT information, and the next page carries the second extended information included in the second LT information.

Alternatively, in some other implementations, the second extended information and the first extended information are in different fields of the control frame. The second extended information may be after the first extended information, and the first extended information is transmitted before the second extended information when the control frame is transmitted. Alternatively, the second extended information may be before the first extended information, and the second extended information is transmitted before the first extended information when the control frame is transmitted. Alternatively, the second extended information may be synchronized with the first extended information, and the first extended information and the second extended information are synchronously transmitted when the control frame is transmitted.

The foregoing is a process in which the first device parses the control frame, and the first device may further perform a process of filling the control frame. In an example embodiment, the method further includes: The first device fills the control frame with reference information of the first device, to obtain an updated control frame. The first device sends the updated control frame to a third device that is in the communication system, where the updated control frame is used by the third device to execute a function of information included in the updated control frame. For example, when the first device is connected to the control system through the out-of-band CMIS interface or the like, after receiving the control frame, the first device has written the content of the control frame into the register. In this case, the first device may also write the reference information of the first device into the register, and the control system next reads the content of the control frame and the reference information of the first device from the register through the CMIS interface or the like, generates the updated control frame, and then sends the updated control frame to the third device. Alternatively, the first device may fill the control frame with the reference information of the first device in an in-band manner, and send the updated control frame to the third device after obtaining the updated control frame.

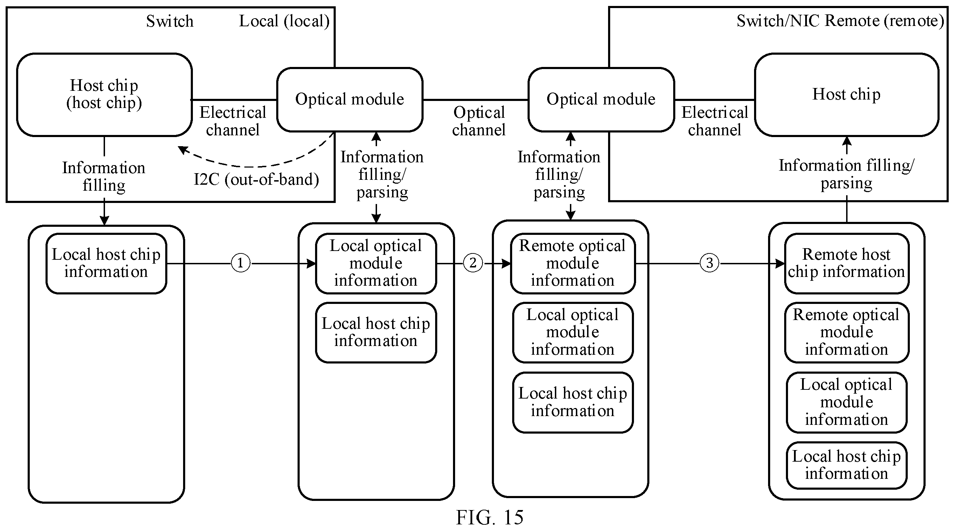

For example, a transmission direction of the control frame is from the second device to the first device, the second device is a device located before the first device in the transmission direction, and the third device may be a device located after the first device in the transmission direction. In the transmission direction of the control frame, each device may independently parse and fill the control frame. For example, as shown in FIG. 15, in a transmission direction from a host chip in a local device to a host chip in a remote device, the chip in the local device (a local host chip) may fill in information, and an optical module in the local device (a local optical module), an optical module in the remote device (a remote optical module), and the host chip in the remote device (a remote host chip) may separately parse and fill in information. For example, the local host chip fills in local host chip information, the local optical module parses the local host chip information (for parameter auto-configuration, where subsequent parsing may also be used for parameter auto-configuration, and details are not described), and fills in local optical module information. The remote optical module parses the local host chip information and the local optical module information, and fills in remote optical module information. The remote host chip parses the local host chip information, the local optical module information, and the remote optical module information, and fills in remote host chip information. Therefore, each device in the communication system can obtain information about another device other than the device by parsing the control frame, so that each device can complete a parameter auto-configuration process with reference to rich information. Certainly, different devices in the communication system may have different capabilities. For example, there may be a case in which some devices have parsing and filling capabilities, and the other devices have only the parsing capability.

The reference information filled in by the first device is not limited in embodiments of this application. The reference information filled in by the first device may include at least one of AN information of the first device (for example, a rate parameter and an FEC capability parameter that are supported by the first device), first LT information of the first device (for example, LT information that is provided by the first device and that is used to obtain an FIR coefficient through training), second LT information of the first device (for example, LT information that is provided by the first device and that is used to obtain a compensation amount for DPD through training), or LT control information of the first device (for example, an editable test code pattern selected by the first device).

For example, the reference information of the first device includes information about a transmission channel (lane) of the first device. The first device may have a plurality of lanes. A correspondence between the plurality of lanes and an interface of the first device is not limited in embodiments of this application. The correspondence may be one-to-one, one-to-many, or many-to-one. For example, the reference information may include information about each of the plurality of lanes, or information about one of the plurality of lanes. The information about the lane is fine-grained information. This helps implement a more refined parameter auto-configuration process. Information about different lanes may be the same or may be different. This is not limited in embodiments of this application.

For example, the first device is a local optical module. A case in which the correspondence in the foregoing paragraph is many-to-one, that is, a case in which a plurality of lanes correspond to one interface of the first device, may include: The plurality of lanes correspond to one interface of the local optical module, and each of the lanes is used to connect to one remote optical module. This case is also referred to as parallel breakout (breakout). For example, the local optical module is connected to four remote optical modules through four lanes. If this local end needs to transmit 400G data to this remote end, the 400G data may be split into four pieces of 100G data, and each lane is used to transmit one piece of 100G data.

In an implementation, in a breakout case, after receiving a control frame, the local optical module obtains an updated control frame for each lane, in other words, the lane is in one-to-one correspondence with the updated control frame. For example, an updated control frame corresponding to one lane includes content of the control frame and filled information of the lane. For example, the local optical module is still connected to the four remote optical modules (denoted as an optical module 0 to an optical module 3) through the four lanes (denoted as a lane 0 to a lane 3). After receiving the control frame, the local optical module fills the control frame with information about the lane 0, to obtain an updated control frame 0, and sends the updated control frame 0 to the remote optical module 0 through the lane 0; and fills the control frame with information about the lane 1, to obtain an updated control frame 1, and sends the updated control frame 1 to the remote optical module 1 through the lane 1. For the lane 2 and the lane 3, cases are similar. Details are not described herein again.

In some implementations, the reference information, the first LT information, and the first extended information are in different fields of the updated control frame. For example, the first LT information and the first extended information that are included in the control frame are located in a first field, and the first device may fill, with the reference information, a second field different from the first field.

In some other implementations, the reference information, the first LT information, and the first extended information are in a same field of the updated control frame, and the reference information is before or after the first LT information and the first extended information. For example, the reference information is after the first LT information and the first extended information. The first LT information and the first extended information that are included in the control frame are located in a third field, and the first device may alternatively fill the third field with the reference information. For example, the third field is filled with the reference information in a next page manner, so that the reference information is after the first LT information and the first extended information.

Step 1102: The first device executes the function of the first LT information and the function of the first extended information.

The control frame includes the first LT information and the first extended information. Therefore, after receiving the control frame, the first device may execute the first function of the first LT information, to obtain the first control parameter for the link between the first device and the second device through training. The first device may further execute the function of the first extended information. For example, when the first extended information includes the AN information, the auto-negotiation between the first device and the second device is completed, to obtain the transmission parameter obtained through auto-negotiation. For another example, when the first extended information includes the second LT information, the second control parameter for the link between the first device and the second device is obtained through training, and the second control parameter is different from the first control parameter. For still another example, when the first extended information includes the LT control information, a process of performing link training based on the first LT information is controlled based on the LT control information. Certainly, a process of performing link training based on the second LT information may be further controlled based on the LT control information.

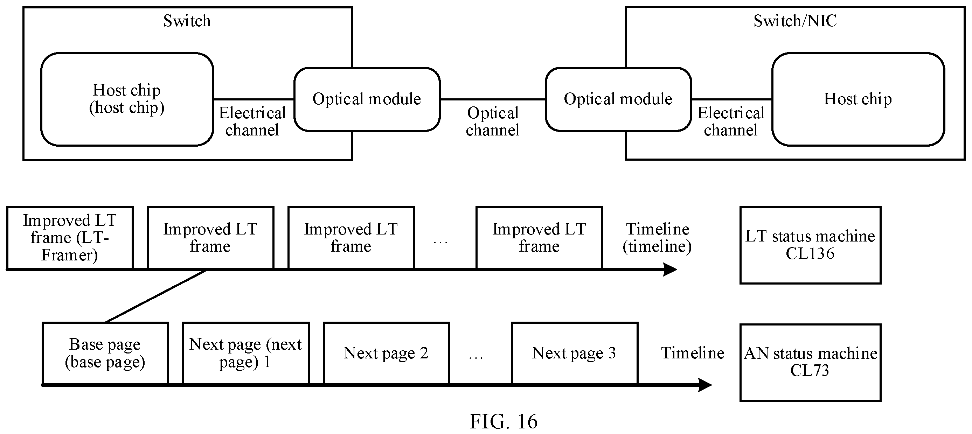

As shown in FIG. 16, a first device receives a control frame, where the control frame is, for example, an improved LT frame, and the improved LT frame includes first LT information and first extended information, the first extended information includes AN information (which may be carried in the improved LT frame in a base page manner, and includes 48 pieces of valid data) and second extended information of the AN information (which may be carried in the improved LT frame in a next page manner). When executing a first function of the first LT information, a second function of second LT information, and a function of LT control information, the first device may use an LT state machine, for example, a state machine defined in the protocol CL136. When executing a function of the AN information, the first device may use an AN state machine, for example, a state machine defined in the protocol CL73. The use of the LT state machine and the use of the AN state machine may be independent of each other and do not interfere with each other.

The first device can complete parameter auto-configuration by executing the function of the first LT information and a function of the first extended information, to establish a communication link between the first device and the second device based on auto-configured parameters. For example, the first device may store various information and parameters (including but not limited to the first LT information, the first extended information, and the auto-configured parameters) in step 1101 and step 1102. If a communication link needs to be re-established subsequently, reference may be made to various information and parameters stored this time, to re-establish the communication link. This improves the efficiency of re-establishing the communication link.

In an example embodiment, there are a plurality of first-channel segments between the first device and the second device. For example, refer to FIG. 12. The plurality of first-channel segments include a channel 0, a channel 1, a channel 2, and a channel 3. For example, that the first device executes the function of the first LT information and the function of the first extended information includes: The first device executes the function of the first LT information and the function of the first extended information in parallel for the plurality of first-channel segments. Compared with the serialization of the LT procedures between different devices in the related technology 1 and the serialization of the AN procedures between different devices in the related technology 2, in embodiments of this application, the function of the first LT information and the function of the first extended information may be executed in parallel for different first channels independently. This reduces overheads and complexity, and improves a fault tolerance rate and the efficiency of executing various functions.

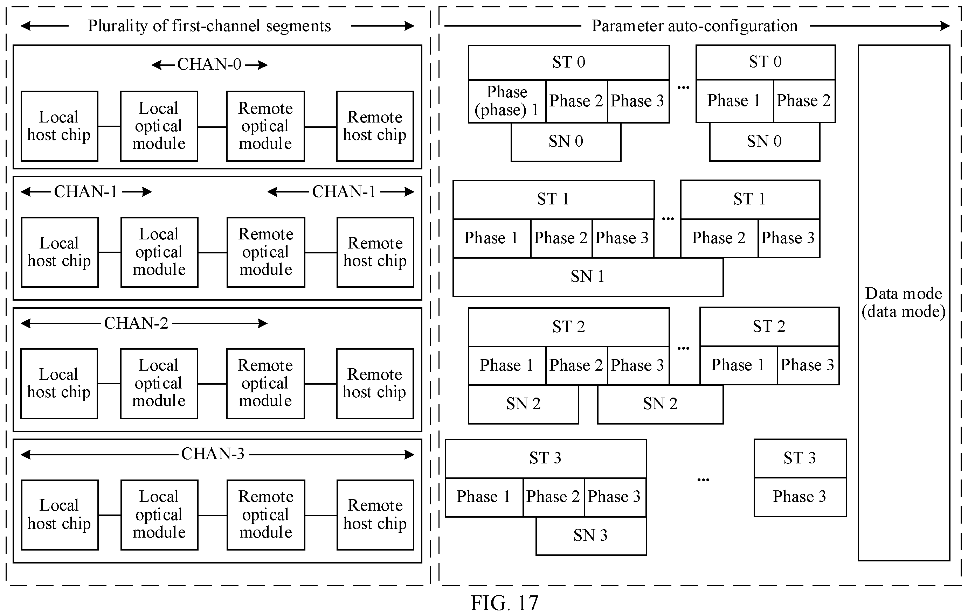

As shown in FIG. 17, an LT procedure on a first channel N is denoted as segment training (segment training, ST) N. For example, an LT procedure on a channel 0 (namely, CHAN-0) is ST 0, an LT procedure on a channel 1 (namely, CHAN-1) is ST 1, an LT procedure on a channel 2 (namely, CHAN-2) is ST 2, and an LT procedure on a channel 3 (namely, CHAN-3) is ST 3. An AN procedure on the first channel N is denoted as segment negotiation (segment negotiation, SN) N. For example, an AN procedure on the channel 0 is SN 0, an AN procedure on the channel 1 is SN 1, an AN procedure on the channel 2 is SN 2, and an AN procedure on the channel 3 is SN 3. This helps distinguish between LT procedures on different first channels and between AN procedures on different first channels.

On different first channels, the LT procedures are independent of each other. For example, an LT procedure is performed on a part of the plurality of first-channel segments, and an LT procedure is not performed on remaining first channels. On different first channels, the AN procedures are independent of each other. For example, an AN procedure is performed on a part of the plurality of first-channel segments, and an AN procedure is not performed on remaining first channels. On the same first channel, an LT procedure and an AN procedure are independent of each other. For example, on one first-channel segment, an LT procedure may be performed and an AN procedure may not be performed, or an AN procedure may be performed and an LT procedure may not be performed, or an AN procedure and an LT procedure may be performed. When the AN procedure and the LT procedure are performed, a quantity of AN procedures and a quantity of LT procedures are not limited in embodiments of this application, and a sequence of the AN procedures and a sequence of the LT procedures are not limited either. For example, a plurality of AN procedures may be performed after one LT procedure is performed, or a plurality of LT procedures may be performed after one AN procedure is performed. The AN procedures may be combined and nested, the LT procedures may be combined and nested, or the LT procedures and the AN procedures may be combined and nested. Certainly, an LT procedure and an AN procedure may not be performed on one first-channel segment. FIG. 17 shows a plurality of cases in which an AN procedure and an LT procedure are independently performed on a channel 0 to a channel 3 (that is, a plurality of first-channel segments) in a parameter auto-configuration process. Details are not described herein. After the parameter auto-configuration process is completed, as shown in FIG. 17, a communication link may be established based on auto-configured parameters, to enter a data mode (data mode), that is, a mode in which data transmission is performed over the communication link.

In an example embodiment, the first extended information includes the AN information, and that the first device executes the function of the first LT information and the function of the first extended information in parallel for the plurality of first-channel segments includes but is not limited to the following two sequences.

In Sequence 1, an LT procedure is first performed, and an AN procedure is then performed. For any segment among the plurality of first-channel segments, namely, a second channel, the first device executes a function of information in the control frame other than the AN information, to obtain a control parameter through training, and executes the function of the AN information based on the control parameter obtained through the training. In Sequence 1, when the AN procedure is performed, reference can be made to the control parameter obtained through training via the LT procedure. This helps improve the accuracy of a parameter obtained through auto-negotiation via the AN procedure.

For example, when an AN procedure is performed for one second channel, a transmission parameter 3 jointly supported by the device 1 and the device 2 is obtained based on a transmission parameter 1 supported by the device 1 at one end of the second channel and a transmission parameter 2 supported by the device 2 at the other end of the second channel. The transmission parameter 3 may include a plurality of rate parameters and a plurality of FEC capability parameters. If no reference is made to a control parameter obtained through training, blind selection may need to be performed on the plurality of rate parameters, and blind selection may need to be performed on the plurality of FEC capability parameters. However, in embodiments of this application, because reference can be made to the control parameter obtained through training, more accurate selection can be performed. This helps select a rate parameter and an FEC capability parameter that better adapt to the second channel, thereby improving the accuracy of the parameters obtained through auto-negotiation.

In Sequence 2, an AN procedure is first performed, and an LT procedure is then performed. For any segment among the plurality of first-channel segments, namely, the second channel, the first device executes the function of the AN information, to obtain a parameter through auto-negotiation, and executes, based on the parameter through auto-negotiation, a function of information in the control frame other than the AN information. In Sequence 2, when the LT procedure is performed, reference can be made to the parameter obtained through the auto-negotiation via the AN procedure. This helps improve the efficiency of the LT procedure.

For example, when an LT procedure is performed for a second channel, a control parameter that needs to be trained and an initial value of the control parameter that needs to be trained can be determined with reference to the parameter obtained through auto-negotiation. This avoids blind adjustment on the control parameter, thereby improving the efficiency of the LT procedure.

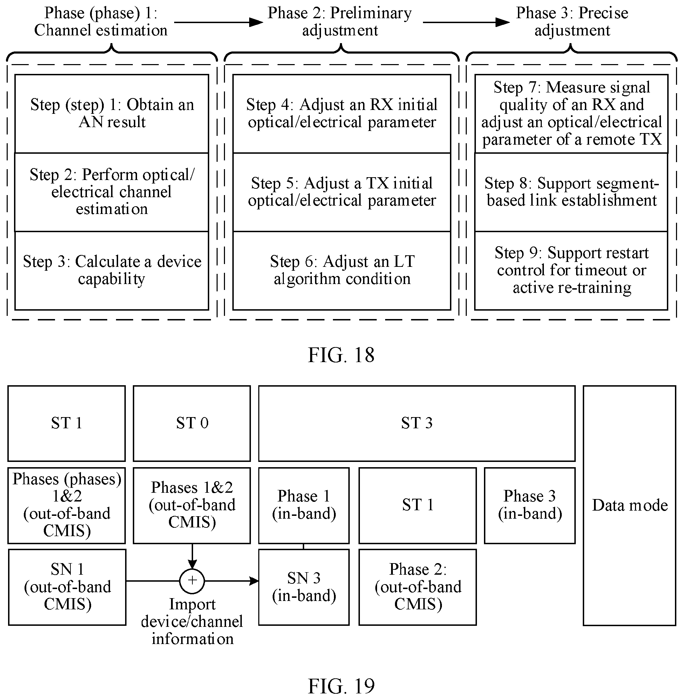

The following provides descriptions by using an example with reference to FIG. 18. For any second channel N in the first channel, an LT procedure ST N on the second channel N may include at least one phase (phase), and each phase may include at least one step (step). These phases and steps included in these phases are performed by first devices at two ends of the second channel N.

A phase 1 is a channel estimation process, including Step 1 to Step 3.

Step 1: Obtain an AN result, where the AN result is a transmission parameter obtained through auto-negotiation via an AN procedure, and may include information about a device and a channel, for example, the rate parameter and the FEC capability parameter in the foregoing example.

Step 2: Perform optical/electrical channel estimation: Calculate signal distortion caused by the device and the channel, for example, information that is allowed to be trained in an LT procedure in an ideal case. For example, based on LT control information, at least one of the following information is determined.

Optical/electrical device information: includes but is not limited to I/Q mismatch, skew, THD, frequency offset, jitter, baseline drift, temperature drift, and the like.

Electrical channel information: includes but is not limited to an insertion loss, a return loss, crosstalk, lane swap, differential pair polarity reversal, skew, and the like.

Optical channel information: includes but is not limited to attenuation, a return loss, dispersion, nonlinearity, a group delay, and the like.

Step 2 may be performed by the first device in an in-band manner (that is, in a channel-associated manner). For example, if the first device has a parsing capability, the first device can parse a control frame in the in-band manner, and perform Step 2 based on LT control information included in the control frame. Alternatively, Step 2 may be performed by the first device in an out-of-band manner. For example, if the first device does not have a parsing capability, the first device stores content of a control frame in a register, and a control system reads the register through an out-of-band CMIS interface and parses the control frame, to perform Step 2 based on LT control information included in the control frame.

Step 3: Evaluate a device capability, for example, information that can be trained in the LT procedure in an actual case. For example, based on second LT information, at least one of the following information is determined:
an equalization coefficient of a TX/RX of a device, an adjustable range corresponding to the equalization coefficient, a supported codec mode (such as FEC interleaving or precoding), an adjustable parameter training combination, a temperature, an adjustable range corresponding to the temperature, and the like.

The second LT information may be in an improved AN frame, or may be in an improved LT frame. This is not limited in embodiments of this application.

Step 3 may be performed by the first device in the in-band or out-of-band manner. When the first device has the parsing capability, the first device parses the control frame in the in-band manner, and performs Step 3 based on the second LT information included in the control frame. When the first device does not have the parsing capability, the first device stores the content of the control frame in the register, and the control system reads the register through the out-of-band CMIS interface and parses the control frame, to perform Step 3 based on the second LT information included in the control frame.

A phase 2 is an adjustment process, for example, a preliminary adjustment process, including Step 4 to Step 6.

Step 4: Adjust an RX initial optical/electrical parameter.

Step 5: Adjust a TX initial optical/electrical parameter.

Step 6: Adjust an LT algorithm condition.

The RX initial optical/electrical parameter, the TX initial optical/electrical parameter, and the LT algorithm condition are all information that can be trained in the LT procedure in an actual case. A process of Step 4 to Step 6 is a process of determining a compensation amount for information that can be trained in the LT procedure in the actual case. Herein, examples of the optical/electrical parameter and the LT algorithm condition are as follows.

The optical/electrical parameter is a compensation amount for pre-emphasis, a compensation amount for differential swing, a compensation amount for a common-mode voltage, a compensation amount for impedance, a compensation amount for a frequency offset, a compensation amount for jitter, a compensation amount for a DPD coefficient, a compensation amount for an AGC coefficient, a compensation amount for a CTLE coefficient, a compensation amount for a DSP coefficient, a compensation amount for an ASP coefficient, a compensation amount for a DFE coefficient, a compensation amount for a float FFE coefficient, a compensation amount for an NLE coefficient, a compensation amount for a bandwidth, a compensation amount for polarization, a compensation amount for an optical wavelength, a compensation amount for a linewidth spectrum, a compensation amount for lane swap, a compensation amount for differential pair polarity reversal, a compensation amount for skew, a codec mode, a compensation amount for power, a compensation amount for an ENOB of an ADC, or the like.

The LT algorithm condition is a preset, an adjustable parameter training combination, a parameter adjustment range, a step, or the like.

Step 4 to Step 6 may be performed by the first device in an in-band or out-of-band manner. For example, the first device parses the control frame in the in-band manner, and performs Step 4 to Step 6 based on the second LT information included in the control frame. For another example, the first device stores the content of the control frame in the register, and the control system reads the register through the out-of-band CMIS interface and parses the control frame, to perform Step 4 to Step 6 based on the second LT information included in the control frame.

A phase 3 is another adjustment process, for example, a precise adjustment process, including Step 7 to Step 9.

Step 7: Measure signal quality of an RX and adjust an optical/electrical parameter of a remote TX.

The signal quality of the RX may be measured by using an SNR, a BER, or the like. Step 7 may be performed by the first device in the in-band or out-of-band manner. For example, the first device parses the control frame in the in-band manner and performs Step 7. For another example, the first device stores the content of the control frame in the register, and the control system reads the register through the out-of-band CMIS interface, parses the control frame, and performs Step 7.

Step 8: All devices are independent of each other and support segment-based link establishment.

In other words, different devices in a communication system may separately start an LT procedure, and separately complete (complete) the LT procedure, to implement segment-based link establishment.

Step 9: Support restart control for timeout or active re-training (re-training).

For example, if time spent in performing a specific step is greater than a timeout threshold, or total time spent in performing a plurality of steps is greater than a timeout threshold, the restart control may be performed to re-perform one or more steps. For another example, the timeout threshold may not be considered, but when it is determined, based on an actual situation, that re-training needs to be performed, the restart control is actively performed.

Step 9 may be implemented based on a quiet (quiet) function in an LT state machine. Timeout thresholds of different devices in the communication system may be independently set, and timeout thresholds of a same device for different channel segments may also be independently set. In other words, timeout thresholds for SN 0 to SN 3 included in the AN procedure and timeout thresholds for ST 0 to ST 3 included in the LT procedure may all be independently set.

Parameter auto-configuration can be completed through Step 1 to Step 9, and establishment of a communication link is completed based on the auto-configured parameters. For example, in this embodiment of this application, the device is supported in storing information and parameters (including but not limited to all information and parameters in Step 1 to Step 9, for example, information about all devices in the communication system and information about all channels in the communication system). When a communication link needs to be re-established subsequently, reference may be made to information and a parameter that are stored when the communication link is established this time. This improves the efficiency of re-establishing the communication link.

In an example embodiment, a loopback function may be implemented between different devices via a control frame, to diagnose a device or a channel.

In some implementations, the device performs internal loopback. To be specific, the device transmits a generated control frame from a TX inside the device to an RX inside the device. If the transmission succeeds, it indicates that there is no fault in the device, and diagnosis of the device is completed.

In some other implementations, the device performs external loopback. To be specific, the device transmits a received control frame from an RX inside the device to a TX inside the device, and diagnosis of a channel is completed by returning the received control frame.

For example, an example in which a communication system includes a device A, a device B, and a device C is used for description. When a loopback function is not enabled, in a transmission direction from the device A to the device C, the device A sends a control frame to the device B, and the device B sends a control frame to the device C. After the loopback function is enabled, in the transmission direction from the device A to the device C, after the device B receives, via an RX inside the device B, the control frame sent by the device A, the device B may further transmit the control frame from the RX inside the device B to a TX inside the device B in addition to sending the control frame to the device C, to return the control frame to the device A via the TX inside the device B. If the device A receives the control frame returned by the device B, it indicates that there is no fault in a channel between the device A and the device B. In this way, diagnosis of the channel is completed. Certainly, the device C may also return the received control frame to the device B, to diagnose a channel between the device B and the device C. Details are not described herein.

Certainly, because the control frame carries first LT information and first extended information, functions of the first LT information and the first extended information can also be executed in a device or channel diagnosis process. An execution manner is described above, and details are not described herein again.

In embodiments of this application, the phase 1 to the phase 3 are independent of each other, and can be flexibly combined and sorted based on actual requirements. For example, at least one of the phase 1, the phase 2, or the phase 3 is selected for execution. When two or three phases are selected, an execution sequence of the phases is not limited. In addition, Step 1 to Step 9 are also independent of each other, and can be flexibly combined and sorted based on actual requirements. For example, at least one of Step 1 to Step 9 is selected for execution. When a plurality of steps are selected, an execution sequence of the steps is not limited.

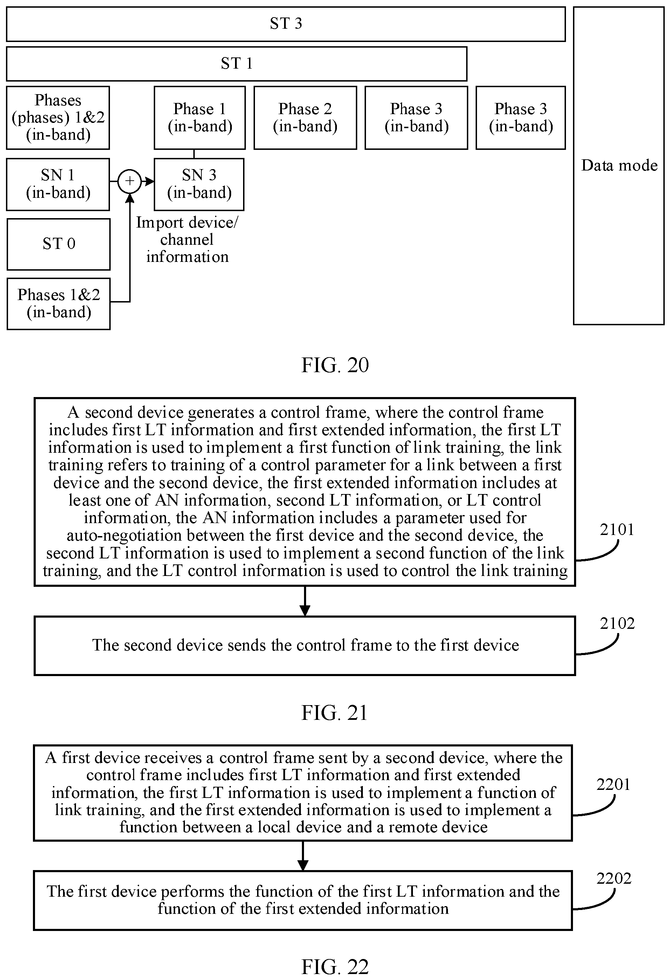

The following uses a scenario shown in FIG. 12 as an example to describe an AN process and an LT process of each first channel in the communication system with reference to FIG. 19 and FIG. 20.

For example, it is assumed that in the scenario shown in FIG. 12, both the two optical modules are LPO optical modules of the standard architecture shown in FIG. 9, and need to be connected to a control system through an out-of-band CMIS interface, to implement the method provided in this embodiment of this application. Refer to FIG. 19. A parameter auto-configuration process may include the following content. The following content may be performed in parallel. An execution sequence is not limited in embodiments of this application.

In a parameter auto-configuration process for CHAN-1 (an electrical channel) between a host chip in a local device and a local optical module, a phase 1 and a phase 2 included in ST 1 are performed in an out-of-band CMIS manner, to complete channel estimation of the electrical channel and preliminary parameter adjustment on the electrical channel, and SN 1 is performed in the out-of-band CMIS manner, to complete auto-negotiation of information about intra-board devices (including but not limited to the host chip in the local device and the local optical module). For a parameter auto-configuration process for CHAN-1 (an electrical channel) between a host chip in a remote device and a remote optical module (for example, ST 1 including a phase 2 in FIG. 19, which may be used to complete preliminary parameter adjustment on the host chip and the optical module), refer to the parameter auto-configuration process for CHAN-1 at the local end. Details are not described herein again.

In a parameter auto-configuration process for CHAN-0 (an optical channel) between the local optical module and the remote optical module, a phase 1 and a phase 2 included in ST 0 are performed in an out-of-band CMIS manner, to complete optical channel estimation and preliminary parameter adjustment on the optical channel.

In a parameter auto-configuration process for CHAN-3 (including an electrical channel and an optical channel) between the host chip in the local device and the host chip in the remote device, a phase 1 and a phase 3 included in ST 3 are performed in an in-band manner, to complete full-channel estimation and precise parameter adjustment on the host chip, and SN 3 is performed in the in-band manner, to complete auto-negotiation of information about inter-board devices (including but not limited to the host chip in the local device and the host chip in the remote device). When SN 3 is performed, reference may be made to auto-configured parameters obtained through ST 3, SN 1, and ST 0.

For another example, it is assumed that in the scenario shown in FIG. 12, both the two optical modules are LPO optical modules of the improved architecture shown in FIG. 10, and the method provided in this embodiment of this application can be performed in an in-band manner without depending on an out-of-band CMIS interface. Refer to FIG. 20. A parameter auto-configuration process may include the following content. The following content may be performed in parallel, and an execution sequence is not limited in embodiments of this application.

In a parameter auto-configuration process for CHAN-1 (an electrical channel) between a host chip in a local device and a local optical module, a phase 1 and a phase 2 (used to perform electrical channel estimation and preliminary parameter adjustment on the electrical channel) included in ST 1, the phase 2 (that is, the phase 2 is performed again, and is used to perform preliminary parameter adjustment on the host chip and the optical module, and in this embodiment of this application, preliminary parameter adjustment and precise parameter adjustment on a channel/device can be independently performed), and a phase 3 (used to perform precise parameter adjustment on the host chip and the optical module) are performed in an in-band manner, and SN 1 is performed in the in-band manner, to complete auto-negotiation on information of intra-board devices (including but not limited to the host chip in the local device and the local optical module).

In a parameter auto-configuration process for CHAN-0 (an optical channel) between the local optical module and a remote optical module, a phase 1 and a phase 2 included in ST 0 are performed in the in-band manner, to complete optical channel estimation and preliminary parameter adjustment on the optical channel.

In a parameter auto-configuration process for CHAN-3 (a full-channel) between the host chip in the local device and a host chip in a remote device, a phase 1 and a phase 3 included in ST 3 are performed in the in-band manner, to complete full-channel estimation and precise parameter adjustment on the host chip, and SN 3 is performed in the in-band manner, to complete auto-negotiation between inter-board devices (including but not limited to the host chip in the local device and the host chip in the remote device). When SN 3 is performed, reference may be made to auto-configured parameters obtained through ST 3, SN 0, and ST 0.

In conclusion, this application provides a control frame. The control frame may not only carry the first LT information, but also carry the first extended information. The control frame has high scalability. Based on the control frame, the first device can execute a function of the first LT information, to obtain a control parameter for a link by training a first function of link training, and also execute a function of the first extended information, to make auto-configured parameters richer and more accurate. This is relatively flexible and comprehensive.

An embodiment of this application provides a parameter auto-configuration method. The method is applied to a second device included in a communication system, and the communication system further includes a first device. As shown in FIG. 21, the method includes the following step 2101 and step 2102.

Step 2101: The second device generates a control frame, where the control frame includes first LT information and first extended information, the first LT information is used to implement a first function of link training, the link training refers to training of a control parameter for a link between the first device and the second device, the first extended information includes at least one of AN information, second LT information, or LT control information, the AN information includes a parameter used for auto-negotiation between the first device and the second device, the second LT information is used to implement a second function of the link training, and the LT control information is used to control the link training.

The second device is at least one of all devices in the communication system, and the first device is any device in all the devices included in the communication system other than the second device. For example, the second device is at least one of an LPO optical module, a half retimed module, a CPO module, an NPO module, an AEC module, an ACC module, or a passive DAC module. Certainly, the second device may alternatively include an oDSP optical module, a host chip, a retimer, an AOC, and the like. The second device is not limited in embodiments of this application.

In some implementations, the second device generates the control frame in an in-band manner.

In some other implementations, that the second device generates the control frame includes: The second device fills a register with the first LT information and the first extended information. The second device reads the register, and generates the control frame based on the read content. For example, the second device is connected to a control system through an out-of-band CMIS interface or the like. After the second device fills the register with the first LT information and the first extended information, the control system may read the register through the CMIS interface, to generate the control frame based on the read content. For descriptions of the CMIS interface and the control system, refer to the foregoing descriptions of the third type of architecture. Details are not described herein again.

In some implementations, the control frame is an improved LT frame, the first LT information is in a control and status field of the improved LT frame, and the first extended information is in a PRBS field of the improved LT frame. For this implementation, refer to the descriptions of the first type of format. Details are not described herein again.

In some other implementations, the control frame is a combination of an improved LT frame and a next frame of the improved LT frame, the first LT information is in a control and status field of the improved LT frame, and the first extended information is in the next frame of the improved LT frame. For this implementation, refer to the descriptions of the second type of format. Details are not described herein again. In a possible implementation, the improved LT frame includes a first identifier, and the first identifier indicates that the next frame of the improved LT frame includes the first extended information.

In still some other implementations, the control frame is an improved AN frame, the first extended information includes the AN information, the AN information is on a base page of the improved AN frame, and information in the control frame other than the AN information is on a next page of the improved AN frame. For this implementation, refer to the descriptions of the third type of format. Details are not described herein again. In a possible implementation, the base page of the improved AN frame includes a second identifier, and the second identifier indicates presence of the next page of the improved AN frame.

In a possible implementation, the control frame further includes second extended information, and the second extended information is different from the first extended information.

In a possible implementation, the LPO optical module, the CPO module, or the NPO module includes a microcontroller unit configured with a digital/analog signal processing function chip, and the method is applied to the microcontroller unit.

In a possible implementation, the second device further includes a retimer.

In a possible implementation, the first function includes a basic function, and the second function includes a function other than the first function.

Step 2102: The second device sends the control frame to the first device.

After the second device generates the control frame, the second device may send the generated control frame to the first device. For example, refer to FIG. 15. An example in which the second device is a local host chip and the first device is a local optical module is used. A control frame generated by the second device includes information about the local host chip, for example, first LT information and first extended information of the local host chip. After generating the control frame, the second device sends the control frame to the local optical module.

For beneficial effects and implementations of the parameter auto-configuration method shown in FIG. 21, refer to the beneficial effects and the implementations of the parameter auto-configuration method shown in FIG. 11. Details are not described herein again.

As shown in FIG. 22, an embodiment of this application further provides a parameter auto-configuration method. The method is applied to a first device included in a communication system, the communication system further includes a second device, the first device is located in a local device, and the second device is located in a remote device. The method includes the following step 2201 and step 2202.

Step 2201: The first device receives a control frame sent by the second device, where the control frame includes first LT information and first extended information, the first LT information is used to implement a function of link training, and the first extended information is used to implement a function between the local device and the remote device.

The first device is at least one of all devices in the communication system, the second device is any device in the communication system other than the first device, and the first device and the second device are located in different communication devices in the communication system. For example, refer to FIG. 12. The first device is an optical module in the local device, and the second device is an optical module in the remote device. Other examples are not described herein again.

The link training refers to training of a control parameter for a link between the first device and the second device. The control parameter for the link between the first device and the second device, for example, a control parameter between the local device and the remote device, can be obtained through training based on the first LT information. The link is established between the local device and the remote device based on the control parameter, so that quality of link-based communication can be improved. The control parameter that can be trained based on the first LT information includes an FIR coefficient and a preset parameter. Refer to the descriptions corresponding to the method shown in FIG. 11. Details are not described herein again.

The first extended information is used to implement the function between the local device and the remote device, or the first extended information is control information between different devices in the communication system. For example, the first extended information includes energy efficiency control information between the local device and the remote device, and is used to improve energy efficiency of communication between the local device and the remote device. For example, a codec mode, for example, a mode such as FEC interleaving or precoding, between the local device and the remote device can be determined based on the first extended information. The codec mode can affect the energy efficiency between the local device and the remote device.

For example, the first extended information may alternatively include at least one of the AN information, the second LT information, or the LT control information described above. Refer to the descriptions corresponding to the method shown in FIG. 11. Details are not described herein again.

Step 2202: The first device executes the function of the first LT information and the function of the first extended information.

The control frame includes the first LT information and the first extended information. Therefore, after receiving the control frame, the first device may execute the function of the first LT information, to obtain the control parameter for the link between the first device and the second device through the training. The first device may further execute the function of the first extended information, to assist the function of the first LT information. For example, when the first extended information includes the energy efficiency control information, the function of the first LT information and the function of the first extended information are executed, so that after the link training is performed between the first device and the second device and the control parameter is obtained, the communication link can be established based on the control parameter obtained through the training. This can improve energy efficiency of the communication over the communication link, or improve energy efficiency after the link training.

In a possible implementation, the control frame is an improved LT frame, the first LT information is in a control and status field of the improved LT frame, and the first extended information is in a PRBS field of the improved LT frame.

In a possible implementation, the control frame is a combination of an improved LT frame and a next frame of the improved LT frame, the first LT information is in a control and status field of the improved LT frame, and the first extended information is in the next frame of the improved LT frame.

In a possible implementation, the improved LT frame includes a first identifier, and the first identifier indicates that the next frame of the improved LT frame includes the first extended information.

In a possible implementation, the control frame is an improved AN frame, the first extended information includes the AN information, the AN information is on a base page of the improved AN frame, and information in the control frame other than the AN information is on a next page of the improved AN frame.

In a possible implementation, the base page of the improved AN frame includes a second identifier, and the second identifier indicates presence of the next page of the improved AN frame.

In a possible implementation, the control frame further includes second extended information, and the second extended information is different from the first extended information.

After the first device receives the control frame sent by the second device, the method further includes: The first device fills the control frame with reference information of the first device, to obtain an updated control frame. The first device sends the updated control frame to a third device that is in the communication system, where the updated control frame is used by the third device to execute a function of information included in the updated control frame.

In a possible implementation, the reference information, the first LT information, and the first extended information are in different fields of the updated control frame.

In a possible implementation, the reference information, the first LT information, and the first extended information are in a same field of the updated control frame, and the reference information is before or after the first LT information and the first extended information.

In a possible implementation, the reference information of the first device includes information about a transmission channel of the first device.

In a possible implementation, a plurality of first-channel segments are included between the first device and the second device, and that the first device executes the function of the first LT information and the function of the first extended information includes: The first device executes the function of the first LT information and the function of the first extended information in parallel for the plurality of first-channel segments.

In a possible implementation, the first device is at least one of an LPO optical module, a half retimed module, a CPO module, an NPO module, an AEC module, an ACC module, or a passive DAC module.

In a possible implementation, the LPO optical module, the CPO module, or the NPO module includes a microcontroller unit configured with a digital/analog signal processing function chip, and the method is applied to the microcontroller unit.

In a possible implementation, the first device further includes a retimer.

In conclusion, this application provides a control frame. The control frame may not only carry the first LT information, but also carry the first extended information. The control frame has high scalability. Based on the control frame, the first device can execute the function of the first LT information, to obtain a control parameter for a link by training a first function of link training, and can also execute the function of the first extended information, to assist the function of the first LT information, so that function extension between the local device and the remote device is implemented based on the function of the first LT information, and the function extension can make auto-configured parameters between different devices richer and more accurate. The function extension is relatively flexible and comprehensive, and is applicable to complex scenarios with high requirements on parameter accuracy and auto-configuration efficiency, for example, complex scenarios in which there are a large quantity of devices and device types in a communication system.

For beneficial effects and implementations of the parameter auto-configuration method shown in FIG. 22, refer to the beneficial effects and the implementations of the parameter auto-configuration method shown in FIG. 11 and FIG. 21. Details are not described herein again.

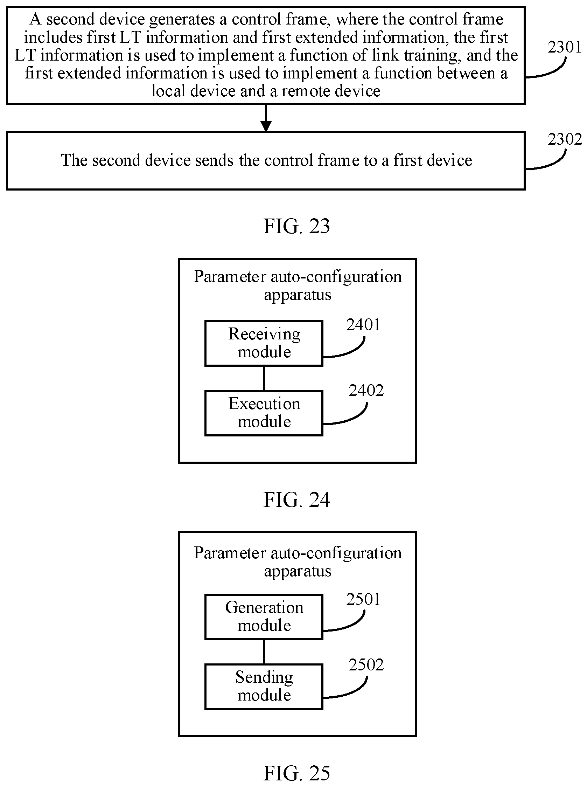

As shown in FIG. 23, an embodiment of this application further provides a parameter auto-configuration method. The method is applied to a second device included in a communication system, the communication system further includes a first device, the second device is located in a local device, and the first device is located in a remote device. The method includes the following step 2301 and step 2302.

Step 2301: The second device generates a control frame, where the control frame includes first LT information and first extended information, the first LT information is used to implement a function of link training, and the first extended information is used to implement a function between the local device and the remote device.

The second device is at least one of all devices in the communication system, the first device is any device in all the devices included in the communication system other than the second device, and the first device and the second device are located in different devices in the communication system, for example, in different switches. For examples of the first device and the second device, refer to step 2201. Details are not described herein again.

Step 2302: The second device sends the control frame to the first device.

The second device may send the control frame to the first device in an in-band manner. Alternatively, the second device may be connected to a control system through an out-of-band CMIS interface or the like, and send the control frame to the first device via the control system. For example, the second device writes content of the control frame into a register, and the control system reads the register through the out-of-band CMIS interface, to obtain content of the control frame. In this case, the control system can generate the control frame and send the control frame to the first device.

In a possible implementation, the control frame is an improved LT frame, the first LT information is in a control and status field of the improved LT frame, and the first extended information is in a PRBS field of the improved LT frame.

In a possible implementation, the control frame is a combination of an improved LT frame and a next frame of the improved LT frame, the first LT information is in a control and status field of the improved LT frame, and the first extended information is in the next frame of the improved LT frame.

In a possible implementation, the improved LT frame includes a first identifier, and the first identifier indicates that the next frame of the improved LT frame includes the first extended information.

In a possible implementation, the control frame is an improved AN frame, the first extended information includes the AN information, the AN information is on a base page of the improved AN frame, and information in the control frame other than the AN information is on a next page of the improved AN frame.

In a possible implementation, the base page of the improved AN frame includes a second identifier, and the second identifier indicates presence of the next page of the improved AN frame.

In a possible implementation, the control frame further includes second extended information, and the second extended information is different from the first extended information.

In a possible implementation, the second device is at least one of an LPO optical module, a half retimed module, a CPO module, an NPO module, an AEC module, an ACC module, or a passive DAC module.

In a possible implementation, the LPO optical module, the CPO module, or the NPO module includes a microcontroller unit configured with a digital/analog signal processing function chip, and the method is applied to the microcontroller unit.

In a possible implementation, the second device further includes a retimer.

For beneficial effects and implementations of the parameter auto-configuration method shown in FIG. 23, refer to the beneficial effects and the implementations of the parameter auto-configuration method shown in FIG. 22. Details are not described herein again.

The foregoing describes the parameter auto-configuration method provided in this embodiment of this application. Corresponding to the foregoing method, an embodiment of this application further provides a parameter auto-configuration apparatus. The apparatus is applied to a first device included in a communication system, and the communication system further includes a second device. The apparatus is configured to perform, by using modules shown in FIG. 24, the parameter auto-configuration method shown in FIG. 11 performed by the first device. As shown in FIG. 24, the parameter auto-configuration apparatus provided in this embodiment of this application includes the following modules.

A receiving module 2401 is configured to receive a control frame sent by the second device, where the control frame includes first LT information and first extended information, the first LT information is used to implement a first function of link training, the link training refers to training of a control parameter for a link between the first device and the second device, the first extended information includes at least one of AN information, second LT information, or LT control information, the AN information includes a parameter used for auto-negotiation between the first device and the second device, the second LT information is used to implement a second function of the link training, and the LT control information is used to control the link training.

An execution module 2402 is configured to execute the function of the first LT information and the function of the first extended information.

In a possible implementation, the control frame is an improved LT frame, the first LT information is in a control and status field of the improved LT frame, and the first extended information is in a PRBS field of the improved LT frame.

In a possible implementation, the control frame is a combination of an improved LT frame and a next frame of the improved LT frame, the first LT information is in a control and status field of the improved LT frame, and the first extended information is in the next frame of the improved LT frame.

In a possible implementation, the improved LT frame includes a first identifier, and the first identifier indicates that the next frame of the improved LT frame includes the first extended information.

In a possible implementation, the control frame is an improved AN frame, the first extended information includes the AN information, the AN information is on a base page of the improved AN frame, and information in the control frame other than the AN information is on a next page of the improved AN frame.

In a possible implementation, the base page of the improved AN frame includes a second identifier, and the second identifier indicates presence of the next page of the improved AN frame.

In a possible implementation, the control frame further includes second extended information, and the second extended information is after the first extended information.

In a possible implementation, the apparatus further includes:
a filling module, configured to fill the control frame with reference information of the first device, to obtain an updated control frame; and
a sending module, configured to send the updated control frame to a third device that is in the communication system, where the updated control frame is used by the third device to execute a function of information included in the updated control frame.

In a possible implementation, the reference information, the first LT information, and the first extended information are in different fields of the updated control frame.

In a possible implementation, the reference information, the first LT information, and the first extended information are in a same field of the updated control frame, and the reference information is before or after the first LT information and the first extended information.

In a possible implementation, the reference information of the first device includes information about a transmission channel of the first device.

In a possible implementation, a plurality of first-channel segments are included between the first device and the second device. The execution module 2402 is configured to execute the function of the first LT information and the function of the first extended information in parallel for the plurality of first-channel segments.

In a possible implementation, the first device is at least one of an LPO optical module, a half retimed module, a CPO module, an NPO module, an AEC module, an ACC module, or a passive DAC module.

In a possible implementation, the LPO optical module, the CPO module, or the NPO module includes a microcontroller unit configured with a digital/analog signal processing function chip, and the method is applied to the microcontroller unit.

In a possible implementation, the first device further includes a retimer.

An embodiment of this application further provides another parameter auto-configuration apparatus. The apparatus is applied to a second device included in a communication system, and the communication system further includes a first device. The apparatus is configured to perform, by using modules shown in FIG. 25, the parameter auto-configuration method shown in FIG. 21 performed by the second device. As shown in FIG. 25, the parameter auto-configuration apparatus provided in this embodiment of this application includes the following modules.

A generation module 2501 is configured to generate a control frame, where the control frame includes first LT information and first extended information, the first LT information is used to implement a first function of link training, the link training refers to training of a control parameter for a link between the first device and the second device, the first extended information includes at least one of AN information, second LT information, or LT control information, the AN information includes a parameter used for auto-negotiation between the first device and the second device, the second LT information is used to implement a second function of the link training, and the LT control information is used to control the link training.

A sending module 2502 is configured to send the control frame to the first device.

In a possible implementation, the generation module 2501 is configured to: fill a register with the first LT information and the first extended information; and read the register, and generate the control frame.

In a possible implementation, the control frame is an improved LT frame, the first LT information is in a control and status field of the improved LT frame, and the first extended information is in a PRBS field of the improved LT frame.

In a possible implementation, the control frame is a combination of an improved LT frame and a next frame of the improved LT frame, the first LT information is in a control and status field of the improved LT frame, and the first extended information is in the next frame of the improved LT frame.

In a possible implementation, the improved LT frame includes a first identifier, and the first identifier indicates that the next frame of the improved LT frame includes the first extended information.

In a possible implementation, the control frame is an improved AN frame, the first extended information includes the AN information, the AN information is on a base page of the improved AN frame, and information in the control frame other than the AN information is on a next page of the improved AN frame.

In a possible implementation, the base page of the improved AN frame includes a second identifier, and the second identifier indicates presence of the next page of the improved AN frame.

In a possible implementation, the control frame further includes second extended information, and the second extended information is different from the first extended information.

In a possible implementation, the second device is at least one of an LPO optical module, a half retimed module, a CPO module, an NPO module, an AEC module, an ACC module, or a passive DAC module.

In a possible implementation, the LPO optical module, the CPO module, or the NPO module includes a microcontroller unit configured with a digital/analog signal processing function chip, and the method is applied to the microcontroller unit.

In a possible implementation, the second device further includes a retimer.

In a possible implementation, the first function includes a basic function, and the second function includes a function other than the first function.

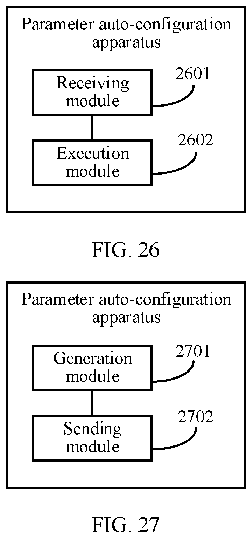

An embodiment of this application further provides another parameter auto-configuration apparatus. The apparatus is applied to a first device included in a communication system, the communication system further includes a second device, the first device is located in a local device, and the second device is located in a remote device. The apparatus is configured to perform, by using modules shown in FIG. 26, the parameter auto-configuration method shown in FIG. 22 performed by the first device. As shown in FIG. 26, the parameter auto-configuration apparatus provided in this embodiment of this application includes the following modules.

A receiving module 2601 is configured to receive a control frame sent by the second device, where the control frame includes first LT information and first extended information, the first LT information is used to implement a function of link training, and the first extended information is used to implement a function between the local device and the remote device.

An execution module 2602 is configured to execute the function of the first LT information and the function of the first extended information.

In a possible implementation, the improved LT frame includes a first identifier, and the first identifier indicates that the next frame of the improved LT frame includes the first extended information.

In a possible implementation, the control frame is an improved AN frame, the first extended information includes the AN information, the AN information is on a base page of the improved AN frame, and information in the control frame other than the AN information is on a next page of the improved AN frame.

In a possible implementation, the base page of the improved AN frame includes a second identifier, and the second identifier indicates presence of the next page of the improved AN frame.

In a possible implementation, the control frame further includes second extended information, and the second extended information is different from the first extended information.

In a possible implementation, the apparatus further includes: a filling module, configured to fill the control frame with reference information of the first device, to obtain an updated control frame; and a sending module, configured to send the updated control frame to a third device that is in the communication system, where the updated control frame is used by the third device to execute a function of information included in the updated control frame.

In a possible implementation, the reference information, the first LT information, and the first extended information are in different fields of the updated control frame.

In a possible implementation, the reference information, the first LT information, and the first extended information are in a same field of the updated control frame, and the reference information is before or after the first LT information and the first extended information.

In a possible implementation, the reference information of the first device includes information about a transmission channel of the first device.

In a possible implementation, the execution module 2602 is configured to execute the function of the first LT information and the function of the first extended information in parallel for the plurality of first-channel segments.

In a possible implementation, the first device is at least one of an LPO optical module, a half retimed module, a CPO module, an NPO module, an AEC module, an ACC module, or a passive DAC module.

In a possible implementation, the LPO optical module, the CPO module, or the NPO module includes a microcontroller unit configured with a digital/analog signal processing function chip, and the apparatus is used in the microcontroller unit.

In a possible implementation, the first device further includes a retimer.

An embodiment of this application further provides another parameter auto-configuration apparatus. The apparatus is applied to a second device included in a communication system, the communication system further includes a first device, the second device is located in a local device, and the first device is located in a remote device. The apparatus is configured to perform, by using modules shown in FIG. 27, the parameter auto-configuration method shown in FIG. 23 performed by the second device. As shown in FIG. 27, the parameter auto-configuration apparatus provided in this embodiment of this application includes the following modules.

A generation module 2701 is configured to generate a control frame, where the control frame includes first LT information and first extended information, the first LT information is used to implement a function of link training, and the first extended information is used to implement a function between the local device and the remote device.

A sending module 2702 is configured to send the control frame to the first device.

In a possible implementation, the control frame is an improved LT frame, the first LT information is in a control and status field of the improved LT frame, and the first extended information is in a PRBS field of the improved LT frame.

In a possible implementation, the control frame is a combination of an improved LT frame and a next frame of the improved LT frame, the first LT information is in a control and status field of the improved LT frame, and the first extended information is in the next frame of the improved LT frame.

In a possible implementation, the improved LT frame includes a first identifier, and the first identifier indicates that the next frame of the improved LT frame includes the first extended information.

In a possible implementation, the control frame is an improved AN frame, the first extended information includes the AN information, the AN information is on a base page of the improved AN frame, and information in the control frame other than the AN information is on a next page of the improved AN frame.

In a possible implementation, the base page of the improved AN frame includes a second identifier, and the second identifier indicates presence of the next page of the improved AN frame.

In a possible implementation, the control frame further includes second extended information, and the second extended information is different from the first extended information.

In a possible implementation, the second device is at least one of an LPO optical module, a half retimed module, a CPO module, an NPO module, an AEC module, an ACC module, or a passive DAC module.

In a possible implementation, the LPO optical module, the CPO module, or the NPO module includes a microcontroller unit configured with a digital/analog signal processing function chip, and the apparatus is used in the microcontroller unit.

In a possible implementation, the second device further includes a retimer.

It should be understood that, when the apparatuses shown in FIG. 24 to FIG. 27 implement functions of the apparatuses, beneficial effects are the same as the beneficial effects of the methods shown in FIG. 11 and FIG. 21 to FIG. 23. When the apparatuses shown in FIG. 24 to FIG. 27 implement functions of the apparatuses, division into the foregoing functional modules is merely used as an example for description. In actual application, the foregoing functions may be allocated and completed by different functional modules based on requirements, that is, an internal structure of a device is divided into different functional modules, to complete all or some of the foregoing described functions. In addition, the apparatuses provided in the foregoing embodiment and the method embodiments belong to a same concept. For a specific implementation process thereof, refer to the method embodiments. Details are not described herein again.

An embodiment of this application further provides a control frame. The control frame includes first LT information and first extended information, the first LT information is used to implement a first function of link training, the link training refers to training of a control parameter for a link between a first device and a second device in a communication system, the first extended information includes at least one of AN information, second LT information, or LT control information, the AN information includes a parameter used for auto-negotiation between the first device and the second device, the second LT information is used to implement a second function of the link training, and the LT control information is used to control the link training.

In a possible implementation, the control frame is an improved LT frame, the first LT information is in a control and status field of the improved LT frame, and the first extended information is in a PRBS field of the improved LT frame.

In a possible implementation, the control frame is a combination of an improved LT frame and a next frame of the improved LT frame, the first LT information is in a control and status field of the improved LT frame, and the first extended information is in the next frame of the improved LT frame.

In a possible implementation, the improved LT frame includes a first identifier, and the first identifier indicates that the next frame of the improved LT frame includes the first extended information.

In a possible implementation, the control frame is an improved AN frame, the first extended information includes the AN information, the AN information is on a base page of the improved AN frame, and information in the control frame other than the AN information is on a next page of the improved AN frame.

In a possible implementation, the base page of the improved AN frame includes a second identifier, and the second identifier indicates presence of the next page of the improved AN frame.

In a possible implementation, the control frame further includes second extended information, and the second extended information is after the first extended information.

For example, an embodiment of this application provides a communication apparatus. The communication apparatus includes a processor and a receiver. The receiver is configured to receive a control frame, and the processor is configured to process the control frame, to cause the communication apparatus to implement the parameter auto-configuration method shown in FIG. 11 or FIG. 22.

In an example embodiment, an embodiment of this application provides another communication apparatus. The communication apparatus includes a processor and a transmitter. The processor is configured to generate a control frame, and the transmitter is configured to send the control frame, to cause the communication apparatus to implement the parameter auto-configuration method shown in FIG. 21 or FIG. 22.

For example, an embodiment of this application provides a chip. The chip includes an interface circuit and a control circuit. The interface circuit is configured to: receive and send data, and the control circuit is configured to process the data, to cause a device on which the chip is installed to implement any parameter auto-configuration method provided in embodiments of this application, for example, the parameter auto-configuration method shown in FIG. 11, FIG. 21, FIG. 22, or FIG. 23.

For example, an embodiment of this application provides a communication system. The communication system includes a first device and a second device, the first device is configured to implement the parameter auto-configuration method shown in FIG. 11 or FIG. 22, and the second device is configured to implement the parameter auto-configuration method shown in FIG. 21 or FIG. 23.

An embodiment of this application further provides a communication device. The communication device includes at least one device, and the device is configured to perform the parameter auto-configuration method provided in embodiments of this application. For example, the device is configured to perform the parameter auto-configuration method shown in at least one of FIG. 11, FIG. 21, FIG. 22, or FIG. 23. In other words, the device has a function of at least one of the first device or the second device provided in embodiments of this application.

All or some of the foregoing embodiments may be implemented by using software, hardware, firmware, or any combination thereof. When software is used to implement the embodiments, all or a part of the embodiments may be implemented in a form of a computer program product. The computer program product includes one or more computer instructions. When the computer program instructions are loaded and executed on the computer, the procedure or functions according to this application are all or partially generated. The computer may be a general-purpose computer, a dedicated computer, a computer network, or other programmable apparatuses. The computer instructions may be stored in a computer-readable storage medium, or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, DVD), a semiconductor medium (for example, a solid-state disk (solid-state drive)), or the like.

In this application, the terms such as "first" and "second" are used to distinguish between same items or similar items that have basically same functions. It should be understood that there is no logical or time sequence dependency between "first", "second", and "n^{th}", and a quantity and an execution sequence are not limited. It should also be understood that although the following descriptions use terms such as "first" and "second" to describe various elements, these elements should not be limited by the terms. These terms are simply used to distinguish one element from another element.

It should be further understood that sequence numbers of the processes do not mean execution sequences in embodiments of this application. The execution sequences of the processes should be determined based on functions and internal logic of the processes, and should not constitute any limitation on implementation processes of embodiments of this application.

The term "at least one" in this application means one or more, and the term "plurality of" in this application means two or more. For example, a plurality of devices means two or more devices. The terms "system" and "network" are often used interchangeably herein.

It should be understood that the terms used in the descriptions of the various examples herein are merely intended to describe specific examples and are not intended to impose a limitation. The terms "one" ("a" and "an") and "the" of singular forms used in the descriptions of various examples and the appended claims are also intended to include plural forms, unless otherwise specified in the context.

It should further be understood that the term "and/or" used in this specification indicates and includes any or all possible combinations of one or more of the associated listed items. The term "and/or" describes an association relationship for describing associated objects and represents that three relationships may exist. For example, A and/or B may represent the following three cases: Only A exists, both A and B exist, and only B exists. In addition, the character "/" in this application usually indicates an "or" relationship between associated objects.

It should be further understood that the term "if" may be interpreted as a meaning of "when" ("when" or "upon") or "in response to determining" or "in response to detecting". Similarly, based on the context, the phrase "if it is determined that" or "if [a stated condition or event] is detected" may be interpreted as a meaning of "when it is determined that" or "in response to determining" or "when [a stated condition or event] is detected" or "in response to detecting [a stated condition or event]".

The foregoing descriptions are merely embodiments of this application, but are not intended to limit this application. Any modification, equivalent replacement, improvement, or the like made within the principle of this application shall fall within the protection scope of this application.

## Claims

1. A parameter auto-configuration method, wherein the method is applied to a first device comprised in a communication system, the communication system further comprises a second device, and the method comprises:
receiving, by the first device, a control frame sent by the second device, wherein the control frame comprises first link training LT information and first extended information, the first LT information is used to implement a first function of link training, the link training refers to training of a control parameter for a link between the first device and the second device, the first extended information comprises at least one of auto-negotiation AN information, second LT information, or LT control information, the AN information comprises a parameter used for auto-negotiation between the first device and the second device, the second LT information is used to implement a second function of the link training, and the LT control information is used to control the link training; and
executing, by the first device, the function of the first LT information and the function of the first extended information.

2. The method according to claim 1, wherein the control frame is an improved LT frame, the first LT information is in a control and status field of the improved LT frame, and the first extended information is in a pseudo random binary sequence PRBS field of the improved LT frame.

3. The method according to claim 1, wherein the control frame is a combination of an improved LT frame and a next frame of the improved LT frame, the first LT information is in a control and status field of the improved LT frame, and the first extended information is in the next frame of the improved LT frame.

4. The method according to claim 3, wherein the improved LT frame comprises a first identifier, and the first identifier indicates that the next frame of the improved LT frame comprises the first extended information.

5. The method according to claim 1, wherein the control frame is an improved AN frame, the first extended information comprises the AN information, the AN information is on a base page of the improved AN frame, and information other than the AN information in the control frame is on a next page of the improved AN frame.

6. The method according to claim 5, wherein the base page of the improved AN frame comprises a second identifier, and the second identifier indicates presence of the next page of the improved AN frame.

7. The method according to any one of claims 1 to 6, wherein the control frame further comprises second extended information, and the second extended information is different from the first extended information.

8. The method according to any one of claims 1 to 7, wherein after receiving, by the first device, the control frame sent by the second device, the method further comprises:
filling, by the first device, the control frame with reference information of the first device to obtain an updated control frame; and
sending, by the first device, the updated control frame to a third device that is in the communication system, wherein the updated control frame is used by the third device to execute a function of information comprised in the updated control frame.

9. The method according to claim 8, wherein the reference information, the first LT information, and the first extended information are in different fields of the updated control frame.

10. The method according to claim 8, wherein the reference information, the first LT information, and the first extended information are in a same field of the updated control frame, and the reference information is after the first LT information and the first extended information.

11. The method according to any one of claims 8 to 10, wherein the reference information of the first device comprises information about a transmission channel of the first device.

12. The method according to any one of claims 1 to 11, wherein a plurality of first-channel segments are between the first device and the second device, and executing, by the first device, the function of the first LT information and the function of the first extended information comprises:
executing, by the first device, the function of the first LT information and the function of the first extended information in parallel for the plurality of first-channel segments.

13. The method according to any one of claims 1 to 12, wherein the first device comprises at least one of a linear-drive pluggable optics LPO optical module, a half retimed module, a co-package optics CPO module, a near-package optics NPO module, an active electrical cable AEC module, an active copper cable ACC module, or a passive direct attach cable DAC module.

14. The method according to claim 13, wherein the LPO optical module, the CPO module, or the NPO module comprises a microcontroller unit configured with a digital/analog signal processing function chip, and the method is applied to the microcontroller unit.

15. The method according to claim 13 or 14, wherein the first device further comprises a retimer.

16. The method according to any one of claims 1 to 15, wherein the first function comprises a basic function, and the second function comprises a function other than the first function.

17. A parameter auto-configuration method, wherein the method is applied to a second device comprised in a communication system, the communication system further comprises a first device, and the method comprises:
generating, by the second device, a control frame, wherein the control frame comprises first link training LT information and first extended information, the first LT information is used to implement a first function of link training, the link training refers to training of a control parameter for a link between the first device and the second device, the first extended information comprises at least one of auto-negotiation AN information, second LT information, or LT control information, the AN information comprises a parameter used for auto-negotiation between the first device and the second device, the second LT information is used to implement a second function of the link training, and the LT control information is used to control the link training; and
sending, by the second device, the control frame to the first device.

18. The method according to claim 17, wherein generating, by the second device, the control frame comprises:
filling, by the second device, a register with the first LT information and the first extended information; and
reading, by the second device, the register, and generating the control frame based on the read content.

19. The method according to claim 17 or 18, wherein the control frame is an improved LT frame, the first LT information is in a control and status field of the improved LT frame, and the first extended information is in a pseudo random binary sequence PRBS field of the improved LT frame.

20. The method according to claim 17 or 18, wherein the control frame is a combination of an improved LT frame and a next frame of the improved LT frame, the first LT information is in a control and status field of the improved LT frame, and the first extended information is in the next frame of the improved LT frame.

21. The method according to claim 17 or 18, wherein the control frame is an improved AN frame, the first extended information comprises the AN information, the AN information is on a base page of the improved AN frame, and information in the control frame other than the AN information is on a next page of the improved AN frame.

22. The method according to any one of claims 17 to 21, wherein the second device comprises at least one of a linear-drive pluggable optics LPO optical module, a half retimed module, a co-package optics CPO module, a near-package optics NPO module, an active electrical cable AEC module, an active copper cable ACC module, or a passive direct attach cable DAC module.

23. A parameter auto-configuration apparatus, wherein the apparatus is applied to a first device comprised in a communication system, the communication system further comprises a second device, and the apparatus comprises:
a receiving module, configured to receive a control frame sent by the second device, wherein the control frame comprises first link training LT information and first extended information, the first LT information is used to implement a first function of link training, the link training refers to training of a control parameter for a link between the first device and the second device, the first extended information comprises at least one of auto-negotiation AN information, second LT information, or LT control information, the AN information comprises a parameter used for auto-negotiation between the first device and the second device, the second LT information is used to implement a second function of the link training, and the LT control information is used to control the link training; and
an execution module, configured to execute the function of the first LT information and the function of the first extended information.

24. The apparatus according to claim 23, wherein the control frame is an improved LT frame, the first LT information is in a control and status field of the improved LT frame, and the first extended information is in a pseudo random binary sequence PRBS field of the improved LT frame.

25. The apparatus according to claim 23, wherein the control frame is a combination of an improved LT frame and a next frame of the improved LT frame, the first LT information is in a control and status field of the improved LT frame, and the first extended information is in the next frame of the improved LT frame.

26. The apparatus according to claim 25, wherein the improved LT frame comprises a first identifier, and the first identifier indicates that the next frame of the improved LT frame comprises the first extended information.

27. The apparatus according to claim 23, wherein the control frame is an improved AN frame, the first extended information comprises the AN information, the AN information is on a base page of the improved AN frame, and information in the control frame other than the AN information is on a next page of the improved AN frame.

28. The apparatus according to claim 27, wherein the base page of the improved AN frame comprises a second identifier, and the second identifier indicates presence of the next page of the improved AN frame.

29. The apparatus according to any one of claims 23 to 28, wherein the control frame further comprises second extended information, and the second extended information is different from the first extended information.

30. The apparatus according to any one of claims 23 to 29, wherein the apparatus further comprises:
a filling module, configured to fill the control frame with reference information of the first device, to obtain an updated control frame; and
a sending module, configured to send the updated control frame to a third device that is in the communication system, wherein the updated control frame is used by the third device to execute a function of information comprised in the updated control frame.

31. The apparatus according to claim 30, wherein the reference information, the first LT information, and the first extended information are in different fields of the updated control frame.

32. The apparatus according to claim 30, wherein the reference information, the first LT information, and the first extended information are in a same field of the updated control frame, and the reference information is after the first LT information and the first extended information.

33. The apparatus according to any one of claims 30 to 32, wherein the reference information of the first device comprises information about a transmission channel of the first device.

34. The apparatus according to any one of claims 23 to 33, wherein a plurality of first-channel segments are comprised between the first device and the second device; and
the execution module is configured to execute the function of the first LT information and the function of the first extended information in parallel for the plurality of first-channel segments.

35. The apparatus according to any one of claims 23 to 34, wherein the first device comprises at least one of a linear-drive pluggable optics LPO optical module, a half retimed module, a co-package optics CPO module, a near-package optics NPO module, an active electrical cable AEC module, an active copper cable ACC module, or a passive direct attach cable DAC module.

36. The apparatus according to claim 35, wherein the LPO optical module, the CPO module, or the NPO module comprises a microcontroller unit configured with a digital/analog signal processing function chip, and the method is applied to the microcontroller unit.

37. The apparatus according to claim 35 or 36, wherein the first device further comprises a retimer.

38. A parameter auto-configuration apparatus, wherein the apparatus is applied to a second device comprised in a communication system, the communication system further comprises a first device, and the apparatus comprises:
a generation module, configured to generate a control frame, wherein the control frame comprises first link training LT information and first extended information, the first LT information is used to implement a first function of link training, the link training refers to training of a control parameter for a link between the first device and the second device, the first extended information comprises at least one of auto-negotiation AN information, second LT information, or LT control information, the AN information comprises a parameter used for auto-negotiation between the first device and the second device, the second LT information is used to implement a second function of the link training, and the LT control information is used to control the link training; and
a sending module, configured to send the control frame to the first device.

39. The apparatus according to claim 38, wherein the generation module is configured to: fill a register with the first LT information and the first extended information; and read the register, and generate the control frame.

40. The apparatus according to claim 38 or 39, wherein the control frame is an improved LT frame, the first LT information is in a control and status field of the improved LT frame, and the first extended information is in a pseudo random binary sequence PRBS field of the improved LT frame.

41. The apparatus according to claim 38 or 39, wherein the control frame is a combination of an improved LT frame and a next frame of the improved LT frame, the first LT information is in a control and status field of the improved LT frame, and the first extended information is in the next frame of the improved LT frame.

42. The apparatus according to claim 38 or 39, wherein the control frame is an improved AN frame, the first extended information comprises the AN information, the AN information is on a base page of the improved AN frame, and information in the control frame other than the AN information is on a next page of the improved AN frame.

43. The apparatus according to any one of claims 38 to 42, wherein the second device comprises at least one of a linear-drive pluggable optics LPO optical module, a half retimed module, a co-package optics CPO module, a near-package optics NPO module, an active electrical cable AEC module, an active copper cable ACC module, or a passive direct attach cable DAC module.

44. A parameter auto-configuration method, wherein the method is applied to a first device comprised in a communication system, the communication system further comprises a second device, the first device is located in a local device, the second device is located in a remote device, and the method comprises:
receiving, by the first device, a control frame sent by the second device, wherein the control frame comprises first link training LT information and first extended information, the first LT information is used to implement a function of link training, and the first extended information is used to implement a function between the local device and the remote device; and
executing, by the first device, the function of the first LT information and the function of the first extended information.

45. The method according to claim 44, wherein the control frame is an improved LT frame, the first LT information is in a control and status field of the improved LT frame, and the first extended information is in a pseudo random binary sequence PRBS field of the improved LT frame.

46. The method according to claim 44, wherein the control frame is a combination of an improved LT frame and a next frame of the improved LT frame, the first LT information is in a control and status field of the improved LT frame, and the first extended information is in the next frame of the improved LT frame.

47. The method according to claim 44, wherein the control frame is an improved auto-negotiation AN frame, the first extended information comprises the AN information, the AN information is on a base page of the improved AN frame, and information in the control frame other than the AN information is on a next page of the improved AN frame.

48. A parameter auto-configuration method, wherein the method is applied to a second device comprised in a communication system, the communication system further comprises a first device, the second device is located in a local device, the first device is located in a remote device, and the method comprises:
generating, by the second device, a control frame, wherein the control frame comprises first link training LT information and first extended information, the first LT information is used to implement a function of link training, and the first extended information is used to implement a function between the local device and the remote device; and
sending, by the second device, the control frame to the first device.

49. The method according to claim 48, wherein the control frame is an improved LT frame, the first LT information is in a control and status field of the improved LT frame, and the first extended information is in a pseudo random binary sequence PRBS field of the improved LT frame.

50. The method according to claim 48, wherein the control frame is a combination of an improved LT frame and a next frame of the improved LT frame, the first LT information is in a control and status field of the improved LT frame, and the first extended information is in the next frame of the improved LT frame.

51. The method according to claim 48, wherein the control frame is an improved auto-negotiation AN frame, the first extended information comprises the AN information, the AN information is on a base page of the improved AN frame, and information in the control frame other than the AN information is on a next page of the improved AN frame.

52. A parameter auto-configuration apparatus, wherein the apparatus is applied to a first device comprised in a communication system, the communication system further comprises a second device, and the apparatus comprises:
a receiving module, configured to perform a receiving step in the parameter auto-configuration method according to any one of claims 44 to 47; and
an execution module, configured to perform a step other than the receiving step in the parameter auto-configuration method according to any one of claims 44 to 47.

53. A parameter auto-configuration apparatus, wherein the apparatus is applied to a second device comprised in a communication system, the communication system further comprises a first device, and the apparatus comprises:
a generation module, configured to perform a step other than a sending step in the parameter auto-configuration method according to any one of claims 48 to 51; and
a sending module, configured to perform the sending step in the parameter auto-configuration method according to any one of claims 48 to 51.

54. A communication apparatus, wherein the communication apparatus comprises a processor and a receiver, wherein the receiver is configured to receive a control frame, and the processor is configured to process the control frame, to cause the communication apparatus to implement the parameter auto-configuration method according to any one of claims 1 to 16 and claims 44 to 47.

55. A communication apparatus, wherein the communication apparatus comprises a processor and a transmitter, wherein the processor is configured to generate a control frame, and the transmitter is configured to send the control frame, to cause the communication apparatus to implement the parameter auto-configuration method according to any one of claims 17 to 22 and claims 48 to 51.

56. A chip, wherein the chip comprises an interface circuit and a control circuit, the interface circuit is configured to: receive and send data, and the control circuit is configured to process the data, to cause a device on which the chip is installed to implement the parameter auto-configuration method according to any one of claims 1 to 22 and claims 44 to 51.

57. A communication system, wherein the communication system comprises a first device and a second device, the first device is configured to implement the parameter auto-configuration method according to any one of claims 1 to 16 and claims 44 to 47, and the second device is configured to implement the parameter auto-configuration method according to any one of claims 17 to 22 and claims 48 to 51.
